# FASCICULE DE BREVET EUROPEEN

(11) **EP 3 499 603 B1**
(45) Date de publication et mention de la délivrance du brevet: **12.02.2020**
(21) Numéro de dépôt: 18212072.5
(22) Date de dépôt: 12.12.2018
(51) Int. Cl.: H01M 2/02, H01M 2/04, H01M 2/06, H01M 2/10, H01M 2/20, H01M 2/22, H01M 2/30, H01R 11/28, H01M 10/654, H01M 2/12, H01M 10/0525, H01M 10/0587, H01M 10/42, H01M 10/6556, H01M 10/6568

(54) **TRAVERSEE FORMANT BORNE POUR ACCUMULATEUR ELECTROCHIMIQUE METAL-ION, ACCUMULATEUR ASSOCIE**
QUERLEISTE, DIE ALS KLEMMENLEISTE FÜR ELEKTROCHEMISCHEN METALLIONEN-AKKU DIENT, UND ENTSPRECHENDER AKKU
CROSSMEMBER FORMING A TERMINAL FOR A METAL-ION ELECTROCHEMICAL STORAGE CELL, ASSOCIATED CELL

(30) Priorité: 14.12.2017 FR 1762152
(43) Date de publication de la demande: 19.06.2019
(73) Titulaire: Commissariat à l'Energie Atomique et aux Energies Alternatives, 75015 Paris (FR)
(72) Inventeur: JOST, Pierre, 38054 GRENOBLE Cedex 09 (FR); DEWULF, Frédéric, 38054 GRENOBLE Cedex 09 (FR); LEJOSNE, Johann, 38054 GRENOBLE Cedex 09 (FR)
(74) Mandataire: Nony

(56) Documents cités:
- EP-A1- 2 101 336
- WO-A1-2012/115131
- JP-A- 2002 231 298
- US-A1- 2015 118 547

## Description

### Domaine technique

La présente invention concerne le domaine des accumulateurs métal-ion.

Plus particulièrement, l'invention a trait à un module d'accumulateurs métal-ion alignés dans un tube et en série électrique.

L'invention vise en premier lieu à améliorer l'homogénéité électrique et thermique d'accumulateurs au sein d'un pack-batterie.

Pour cela, l'invention propose une gestion électrique et thermique modulaire du pack à partir d'un même accumulateur unitaire.

Enfin, elle offre un renforcement de la sécurité du pack via le pilotage électrique, le pilotage thermique et la détection des gaz.

Bien que décrite en référence à un accumulateur Lithium-ion, l'invention s'applique à tout accumulateur électrochimique métal-ion, c'est-à-dire également Sodium-ion, Magnésium-ion, Aluminium-ion...

### Art antérieur

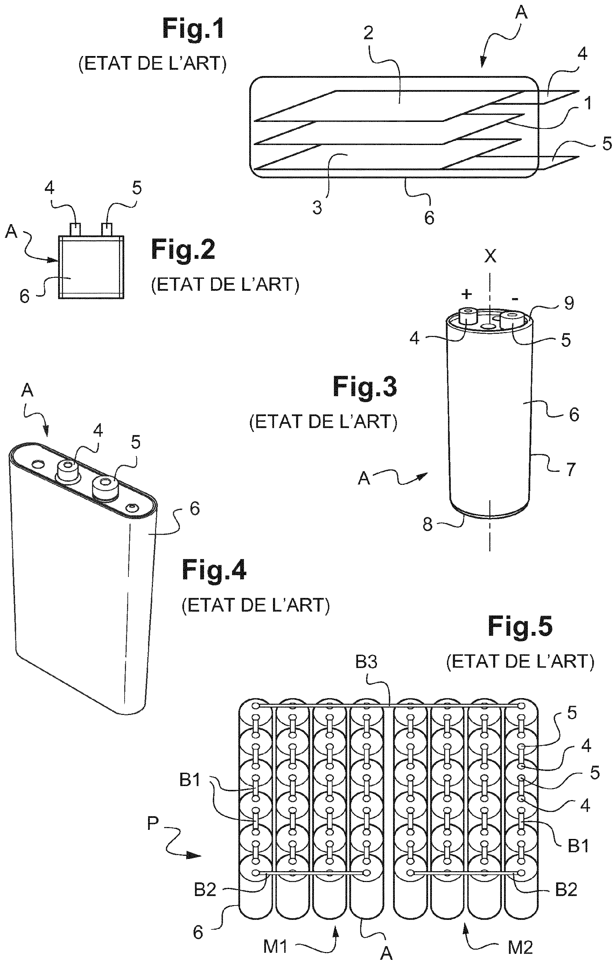

Telle qu'illustrée schématiquement en figures 1 et 2, une batterie ou accumulateur lithium-ion comporte usuellement au moins une cellule électrochimique C constituée d'un constituant d'électrolyte 1 entre une électrode positive ou cathode 2 et une électrode négative ou anode 3, un collecteur de courant 4 connecté à la cathode 2, un collecteur de courant 5 connecté à l' anode 3 et enfin, un emballage 6 agencé pour contenir la cellule électrochimique avec étanchéité tout en étant traversé par une partie des collecteurs de courant 4, 5.

WO 2012/115131 A1 divulgue une batterie cylindrique lithium-ion ayant en son centre un mandrin creux (8) servant à la circulation d'un fluide caloporteur et à l'échappement des gazes. La borne de sortie comprend une pièce mâle (15, 17) ayant trois parties de diamètre croissant, et deux pièces femelles (23, 25) vissées autour de la pièce mâle. Bien que le matériau des pièces femelles ne soit pas décrit, vu qu'il s'agit d'une fixation par vissage, au moins l'écrou (25) est du même matériau (conducteur) que la partie filetée de la pièce mâle. La borne passe par un orifice dans la paroi (7) du boîtier, et en est isolée électriquement par deux rondelles (19, 21).

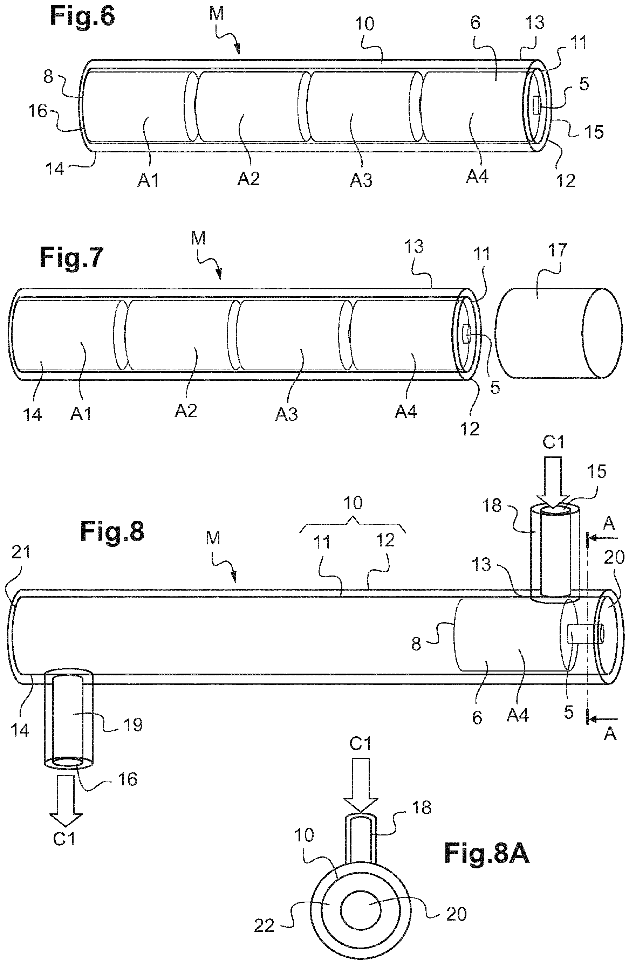

JP 2002 231298 A divulgue un module de batteries reliées entre elles par une traversée formant borne (18), ayant un passage interne, insérée dans le mandrin creux (18a, 21b) de la batterie suivante afin d'assurer un lien mécanique, une connexion en série, ainsi qu'un passage continu pour un fluide de caloporteur. La traversée comporte une pièce mâle (18b) entourée d'une pièce femelle (18d), et est isolée de la paroi (22) par une rondelle (24a). Plusieurs modules assemblés (fig. 8) forment un pack.

US 2015/118547 A1 divulgue une traversée formant borne pour batterie Li-ion comprenant une pièce mâle (2) passant par une ouverture dans la paroi (3) de la batterie, ainsi qu'une pièce femelle (4, 6) vissée autour de la pièce mâle. Deux rondelles (5A, 5B) assurent l'isolation électrique et l'étanchéité entre la paroi de la batterie et la traversée.

EP 2 101 336 A1 divulgue une batterie cylindrique ayant en son centre un mandrin creux (24, 25) servant à la circulation d'un fluide caloporteur, les batteries étant reliées électriquement les unes aux autres par fichage entre une partie mâle (27) et une partie femelle (28), lesquelles pouvant comporter un filetage.

Plusieurs types de géométrie d'architecture d'accumulateur sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme LiFePO₄, LiCoO₂, LiNi_{0.33}Mn_{0.33}Co_{0.33}O₂.

L'électrode négative ou anode 3 est très souvent constituée de carbone graphite ou en Li₄TiO₅O₁₂ (matériau titanate), éventuellement également à base de silicium ou de composite formé à base de silicium.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouches, constitué d'un empilement de couches d'aluminium recouvertes par un ou plusieurs film(s) en polymère laminés par collage.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Aussi, à ce jour un emballage rigide utilisé est constitué d'un boitier métallique, généralement en métal, typiquement en acier inoxydable (inox 316L ou inox 304) ou en aluminium (Al 1050 ou Al 3003), ou encore en titane. En outre, l'aluminium est généralement préféré pour son coefficient de conductivité thermique élevé comme expliqué ci-après.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique autour d'un mandrin cylindrique. Des formes prismatiques de boitiers ont également déjà été réalisées par bobinage autour d'un mandrin prismatique.

La demande de brevet FR3004292 décrit l'utilisation de l'intérieur du mandrin en tant que lame d'air pour refroidir à cœur une cellule enroulée d'un accumulateur métal-ion.

Un des types de boitier rigide de forme cylindrique, usuellement fabriqué pour un accumulateur Li-ion de forte capacité, est illustré en figure 3.

Un boitier rigide de forme prismatique est également montré en figure 4.

Le boitier 6 comporte une enveloppe latérale cylindrique 7, un fond 8 à une extrémité, un couvercle 9 à l'autre extrémité, le fond 8 et le couvercle 9 étant assemblés à l'enveloppe 7. Le couvercle 9 supporte les pôles ou bornes de sortie du courant 4, 5. Une des bornes de sortie (pôles), par exemple la borne positive 4 est soudée sur le couvercle 9 tandis que l'autre borne de sortie, par exemple la borne négative 5, passe à travers le couvercle 9 avec interposition d'un joint non représenté qui isole électriquement la borne négative 5 du couvercle.

Le type de boitier rigide largement fabriqué consiste également en un godet embouti et un couvercle soudés entre eux sur leur périphérie par laser. En revanche, les collecteurs de courant comprennent une traversée avec une partie faisant saillie sur le dessus du boitier et qui forme une borne aussi appelée pôle apparent de la batterie.

La difficulté de réalisation d'une telle borne réside principalement dans l'assemblage des différents composants de la batterie afin d'avoir un design robuste. La nature des matériaux utilisée est également importante afin d'être compatible avec certains couples électrochimiques. En effet, la technologie Li-ion nécessite de préférence à sélectionner un grade d'aluminium le plus pur possible à l'intérieur de l'accumulateur pour éviter la présence de pollutions et la génération de couple galvaniques en présence de l'électrolyte pouvant mener à de la corrosion.

En outre, une borne en traversée étanche doit être robuste mécaniquement et respecter les conditions suivantes:
- ne pas se déformer au cours des étapes d'assemblage de l'accumulateur ;
- supporter un couple de serrage, généralement supérieur à 3N.m, devant permettre l'assemblage de l'accumulateur en module ;
- rester intègre pendant toute la durée de vie d'un accumulateur dans son application, c'est-à-dire résister aux vibrations, chocs mécaniques, variations de températures et de pression.., sans déformation et sans fuite ;
- permettre de drainer des courants élevés pouvant dépasser 50A, dans le cas d'un accumulateur seul, de capacité inférieure à 5Ah nominale, afin de pouvoir être utilisé dans des applications de puissance.

Un exemple d'assemblage avantageux d'une traversée formant borne avec un collecteur de courant et avec le couvercle d'un boitier est décrit dans la demande internationale déposée par la Demanderesse le 1 septembre 2017 sous le n° PCT/EP2017/071951.

Un pack batterie P est constitué d'un nombre variable d'accumulateurs pouvant atteindre plusieurs milliers qui sont reliés électriquement en série ou en parallèle entre eux et généralement par des barres de connexion, appelées usuellement, busbars.

Un exemple de pack-batterie P est montré en figure 5. Ce pack est constitué de deux modules M1, M2 d'accumulateurs Li-ion A identiques et reliés entre eux en série, chaque module M1, M2 étant constitué de quatre rangées d'accumulateurs reliés en parallèle, chaque rangée étant constituée d'un nombre égal à six accumulateurs Li-ion.

Comme représenté, la connexion mécanique et électrique entre deux accumulateurs Li-ion d'une même rangée est réalisée par vissage de busbars B1, avantageusement en cuivre, reliant chacune une borne positive 4 à une borne négative 5. La connexion entre deux rangées d'accumulateurs en parallèle au sein d'un même module M1 ou M2 est assurée par un busbar B2, également avantageusement en cuivre. La connexion entre les deux modules M1, M2 est assurée par un busbar B3, également avantageusement en cuivre.

Dans le développement et la fabrication des batteries lithium-ion, pour chaque profil de charge/décharge spécifique à chaque nouvelle demande, quels que soient les acteurs du marché, cela nécessite des dimensionnements précis (architecteurs électriques série/parallèle, mécaniques, thermiques...) pour concevoir de manière optimale un pack batterie performant et sécuritaire.

Un système électrochimique lithium, que ce soit à l'échelle cellule, module ou pack, produit des réactions exothermiques quel que soit le profil de cyclage donné. Ainsi, à l'échelle d'un accumulateur unitaire, en fonction des chimies considérées, le fonctionnement optimal des accumulateurs lithium ion est limité dans une certaine gamme de température.

Un accumulateur doit contrôler sa température, typiquement généralement inférieure à 70°C à sa surface extérieure de boitier, afin d'éviter de partir en emballement thermique qui peut être suivi d'une génération de gaz et d'explosion et/ou feu.

Egalement, le maintien d'une température inférieure à 70°C permet d'augmenter sa durée de vie, car plus la température de fonctionnement d'un accumulateur est élevée, plus sa durée de vie sera diminuée.

En outre, certaines chimies d'accumulateurs requièrent une température de fonctionnement bien au-delà de la température ambiante et par conséquent, il s'avère nécessaire de réguler leur niveau de température par un préchauffage initial des accumulateurs, voire par un maintien en température permanent des accumulateurs.

Dans une batterie, ou pack-batterie à plusieurs accumulateurs Li-ion, la mise en série ou parallèle d'accumulateurs plus ou moins différents peut avoir des conséquences sur les performances et durabilité résultants pour le pack.

Il est ainsi reconnu que dans un pack-batterie, par exemple de véhicule électrique, les dispersions de vieillissements peuvent être élevées en fonction par exemple de la position des accumulateurs, suite à des dissymétries de vieillissement entre les accumulateurs ou des différences d'utilisations (variations thermiques entre le cœur et les bords du pack, gradient de courant...). Ainsi, des écarts d'états de santé SOH de l'ordre de 20% entre accumulateurs d'un même pack peuvent être observés.

Aussi, afin de limiter le vieillissement prématuré du pack, il est nécessaire d'optimiser la température de fonctionnement et la dispersion de température d'un accumulateur à l'autre. Un accumulateur (ou des accumulateurs) qui vieillit (vieillissent) plus vite que les autres peut (peuvent) avoir un impact direct sur les performances électriques du pack-batterie complet.

A l'échelle du module et du pack, typiquement en dessous de 0°C par exemple, il peut être nécessaire d'avoir recours à un pilotage particulier via un BMS, afin de limiter la puissance demandée au pack et d'éviter une dégradation des accumulateurs.

On rappelle ici que le BMS (acronyme anglais de « *Battery Management System* ») est utilisé afin de suivre l'état des différents accumulateurs (état de charge, état de santé....) et de piloter les différents éléments de de sécurité, tels des courants ne devant pas être trop élevés, des potentiels non adaptés (trop élevés ou trop faibles), des températures limites et a donc notamment pour fonction d'arrêter les applications de courant dès l'atteinte de valeurs de tension seuil, i.e. une différence de potentiels entre les deux matériaux d'insertion actifs. Le BMS stoppe donc les applications de courant (charge, décharge) dès l'atteinte de tensions seuils.

Au-delà d'une température supérieure, typiquement de l'ordre 70°C, il convient également d'être vigilant car des réactions électrochimiques peuvent conduire à la destruction des accumulateurs unitaires et provoquer une propagation d'un défaut interne à l'accumulateur, typiquement un court-circuit interne, qui peut conduire à l'extrême à l'explosion du pack. Dans ce cas, il est également nécessaire d'avoir recours au BMS, afin de protéger les accumulateurs.

Par conséquent, un pack-batterie nécessite généralement un BMS très performant, afin de générer des équilibrages de tension.

A contrario, on comprend bien qu'un pack-batterie thermiquement équilibré est aussi une nécessité.

La difficulté intervient pour assurer l'uniformité de la température au sein d'un pack-batterie.

Dans la littérature, les solutions divulguées pour tenter d'assurer une homogénéité de température au sein d'un pack-batterie peuvent être classées essentiellement en trois catégories.

La première catégorie concerne les solutions où on fait circuler un fluide caloporteur (gazeux ou liquide) au sein d'un pack-batterie.

Le brevet US5320190 propose ainsi une circulation d'air pour refroidir un pack-batterie de véhicule, soit en utilisant directement l'air impactant le véhicule lors du roulage, soit en ayant recours à un ventilateur pour les phases en stationnement ou juste après le roulage.

Le brevet CN202259596U propose un pack-batterie qui intègre des distributeurs en air.

Dans la demande de brevet WO2012/165781, il est proposé un système de plaques de guidage d'air qui permet à priori de réduire l'écart de température entre des modules de batteries.

Un liquide de refroidissement peut être utilisé à la place de l'air. Mais, les notions de coût, d'encombrement et de masse supplémentaire peuvent être des facteurs prépondérants en fonction de l'application considérée.

Par exemple, un refroidissement par air est la solution la moins onéreuse puisque comme indiqué, elle consiste en une ventilation d'air forcée entre les accumulateurs. En revanche, les performances thermiques d'un refroidissement par air sont de faible qualité du fait du coefficient d'échange peu élevé et de sa faible inertie thermique. Ainsi, dans ce type de refroidissement, le premier accumulateur va s'échauffer malgré tout au contact de l'air et la température d'air va augmenter. Au passage du deuxième accumulateur, l'air est plus chaud et l'accumulateur est plus chaud que le premier. Au final, on obtient donc des accumulateurs dont la température est inhomogène.

Les solutions par refroidissement liquide sont nettement plus efficaces.

Par exemple, les demandes de brevet WO2008/156737 et US2013/196184 proposent un système de canaux qui épousent chacun une partie de la périphérie de plusieurs accumulateurs cylindriques parallèles les uns aux autres Un liquide caloporteur s'écoule à l'intérieur de ces canaux pour drainer la chaleur.

Le brevet US8877366 concerne une solution de refroidissement par liquide s'écoulant dans des tubulures externes qui refroidissent par conduction thermique des ailettes insérées entre des accumulateurs.

La deuxième catégorie concerne l'utilisation de plaques froides.

Le brevet US8609268 divulgue ainsi un système de plaque froide à l'intérieur duquel un fluide réfrigérant s'écoule, permettant de drainer la chaleur d'accumulateurs au contact de la plaque froide.

La demande de brevet WO2011/013997 propose des ailettes de refroidissement agencées à l'intérieur d'un empilement de cellules planes pour drainer la chaleur des cellules vers un fluide circulant en bas de l'empilement.

La troisième catégorie concerne le refroidissement par matériau à changement de phase. Ainsi, la demande de brevet US2006/0073377 propose de réguler la température des cellules qui sont noyées au sein du matériau à changement de phase. Le matériau est disposé à l'intérieur d'une enveloppe rigide qui contient les cellules électrochimiques et il comble les espaces entre les cellules adjacentes.

Toutes les solutions proposées jusqu'à présent ne sont pas complètement satisfaisantes car le niveau de températures des accumulateurs en fonctionnement reste élevé et l'homogénéité des températures entre accumulateurs insuffisante.

Il existe un besoin d'améliorer les solutions de la gestion thermique des accumulateurs métal-ion, notamment afin de réduire leur température en fonctionnement et de les homogénéiser lorsqu'ils sont assemblés en formant un pack-batterie et ainsi d'augmenter la durée de vie de ce dernier et ce, tout en permettant de définir un pack modulaire optimisé en termes de puissance, encombrement et poids.

En outre, l'amélioration ne doit pas se faire au détriment du besoin de maitrise de la sécurité de fonctionnement de chaque accumulateur, notamment du fait d'une génération des gaz et/ou d'un emballement thermique.

Le but de l'invention est de répondre au moins en partie à ces besoins.

### Exposé de l'invention

L'invention concerne une traversée formant borne telle que définie dans la revendication 1. Dans d'autres aspects, un module d'accumulateurs peut comprendre:
- un tube;
- une pluralité d'accumulateurs métal-ion comprenant chacun une cellule électrochimique C formée d'une cathode, d'une anode et d'un électrolyte intercalé entre la cathode et l'anode, et un boitier agencé pour contenir avec étanchéité la cellule électrochimique enroulée par bobinage autour d'un mandrin; les accumulateurs étant agencés coaxialement selon leur axe longitudinal (X) à l'intérieur du tube; les accumulateurs étant reliés en série électrique entre eux;
- un circuit de fluide caloporteur configuré pour faire circuler un fluide caloporteur à l'intérieur des accumulateurs au moins sur la longueur des mandrins.

Selon une deuxième alternative qui peut être indépendante ou combine avec la première alternative, l'invention concerne un module d'accumulateurs comprenant :
- au moins un tube;
- une pluralité d'accumulateurs métal-ion comprenant chacun une cellule électrochimique C formée d'une cathode, d'une anode et d'un électrolyte intercalé entre la cathode et l'anode, et un boitier agencé pour contenir avec étanchéité la cellule électrochimique enroulée par bobinage autour d'un mandrin; les accumulateurs étant agencés coaxialement selon leur axe longitudinal (X) à l'intérieur du tube; les accumulateurs étant reliés en série électrique entre eux;;
- un circuit ou un réservoir de fluide caloporteur délimité(e) au moins par le tube et configuré(e) pour au moins mettre en contact un volume de fluide caloporteur sur toute la périphérie des boitiers d'accumulateurs.

Ainsi, l'invention consiste à définir un module complètement indépendant avec un tube qui sert de logement d'une pluralité d'accumulateurs alignés les uns à la suite des autres, les accumulateurs étant reliés électriquement entre eux en série et fluidiquement par un circuit commun de caloporteur qui va s'écouler en continu au cœur des faisceaux électrochimiques de tous les accumulateurs et/ou dans une enveloppe extérieure définie par le tube de logement, au contact des boitiers d'accumulateurs.

Grâce à l'invention, la thermique d'un pack-batterie complet peut être gérée manière modulaire en raccordant en série ou en parallèle fluidique entre eux plusieurs modules d'accumulateurs qui sont en outre reliés entre eux en série ou en parallèle électrique.

Par conséquent, le refroidissement ou le réchauffage d'un pack-batterie est simplifié. Par exemple, si le pack-batterie comprend un nombre N d'accumulateurs à maintenir en température, les N accumulateurs peuvent être répartis en plusieurs modules M. Si les N accumulateurs fonctionnent de la même façon, il est avantageux d'avoir le même débit au sein de chacun des M modules. Si certains accumulateurs N fonctionnent différemment et chauffent donc plus, il est aussi possible de réguler le débit de chacun des M modules.

Selon une première variante, le réservoir peut être un réservoir à double-paroi fermée, dont la paroi intérieure ou extérieure est définie par le tube, la double-paroi fermée étant remplie par un matériau à changement de phase (MCP).

Selon une deuxième variante, le circuit peut comprendre un conduit à double-paroi, dont la paroi intérieure ou extérieure est définie par le tube, la double-paroi étant débouchante à l'une de ses extrémités par un orifice d'amenée de fluide et à l'autre de ses extrémités par un orifice de sortie de fluide, pour faire circuler le fluide caloporteur sur toute la périphérie des boitiers d'accumulateurs, depuis l'orifice d'amenée jusqu'à l'orifice de sortie.

Le module peut comprendre deux raccords de fluide étanches traversant chacun longitudinalement l'intérieur d'une extrémité de la double-paroi.

En lieu et place des raccords étanches, le module peut comprendre:
- deux éléments de fermeture étanches obturant chacun longitudinalement une extrémité de la double-paroi ;
- au moins deux collecteurs de fluide étanches traversant chacun latéralement une extrémité de la double-paroi.

Avantageusement, chacun des éléments de fermeture comprend une partie centrale électriquement conductrice, formant borne de sortie électrique du module et une partie périphérique, autour de sa partie centrale, électriquement isolante.

Selon une variante de réalisation, le conduit à double-paroi peut être constitué par deux tubes concentriques distincts des boitiers d'accumulateur, le tube intérieur étant en contact direct avec les enveloppes latérales des boitiers d'accumulateur.

Selon une autre variante de réalisation, la paroi intérieure du conduit à double-paroi est délimitée par les enveloppes latérales des boitiers d'accumulateur, la paroi extérieure étant constituée par le tube.

Avantageusement, le module comprend des moyens de centrage soit entre le tube intérieur et le tube extérieur, soit entre les enveloppes latérales des boitiers et le tube extérieur.

Avantageusement encore, les moyens de centrage peuvent être constitués soit par une pluralité d'ailettes ou d'inserts répartis uniformément à la périphérie du tube intérieur ou des enveloppes latérales des boitiers, soit par une ailette de forme hélicoïdale enroulée autour du tube intérieur ou autour des enveloppes latérales des boitiers, soit par une mousse remplissant de manière homogène le volume entre le tube intérieur et le tube extérieur ou entre les enveloppes latérales des boitiers et le tube extérieur.

On prévoit avantageusement des moyens d'isolation électrique entre ailettes ou mousse et le tube intérieur.

Selon un mode de réalisation avantageux:
- chaque accumulateur comprend une traversée formant borne de sortie faisant saillie du fond ou du couvercle du boitier ;
- le tube loge des moyens mécaniques de compression agencés au moins à une des extrémités du tube, pour assurer le positionnement longitudinal à l'intérieur du tube tout en garantissant l'isolation électrique vis-à-vis du tube.

Chaque accumulateur peut être un accumulateur Li-ion dans lequel :
- le matériau d'électrode(s) négative(s) est choisi dans le groupe comportant le graphite, le lithium, l'oxyde de titanate Li₄TiO₅O_{12 ;}
- le matériau d'électrode(s) positive(s) est choisi dans le groupe comportant LiFePO₄, LiCoO₂, LiNi_{0.33}Mn_{0.33}Co_{0.33}O₂.

L'invention concerne également un module (M) d'accumulateurs selon la première alternative en combinaison avec la deuxième alternative.

L'invention concerne également un pack-batterie comprenant une pluralité de modules (M) d'accumulateurs décrit précédemment, reliés électriquement en série ou en parallèle, avec la pluralité de circuits de caloporteur reliés fluidiquement en série ou en parallèle.

Selon un mode de réalisation avantageux, le pack-batterie comprend:
- une pluralité de modules (M) d'accumulateurs selon la deuxième alternative et le cas échéant selon la première alternative, chaque module (M) comprenant un seul tube à l'intérieur duquel sont logés les accumulateurs alignés;
- deux plaques tubulaires de maintien percées chacune d'une pluralité d'orifices parallèles entre eux, dont le nombre est le même que celui de la pluralité de tubes des modules (M) d'accumulateurs, chacune des deux extrémités de chaque tube étant engagée dans un orifice de maintien d'une plaque tubulaire en étant fixé de manière étanche à cette dernière ;
- un corps creux formant une calandre fixée de manière étanche autour des plaques tubulaires pour délimiter le circuit de caloporteur; la calandre comprenant à l'une de ses extrémités un orifice d'amenée de fluide et à l'autre de ses extrémités un orifice de sortie de fluide.

L'invention concerne sous un autre de ses aspects, un système de suivi des gaz au sein d'un pack-batterie, comprenant :
- un pack-batterie comprenant des accumulateurs électrochimiques métal-ion,
- un circuit de fluide caloporteur pour refroidir ou réchauffer les accumulateurs, comprenant un vase d'expansion adapté pour recueillir et détecter les gaz dégagés par chacun des accumulateurs et ayant circulé dans le fluide caloporteur.

Selon un mode de réalisation avantageux, le système comprend un organe de sécurité pour protéger le vase d'expansion d'une surpression provoquée par les gaz des accumulateurs.

L'organe de sécurité est de préférence une soupape, et/ou un organe de régulation pilotable par le système de contrôle des accumulateurs du pack-batterie (BMS).

L'invention concerne également une batterie ou accumulateur électrochimique métal-ion, pour un système de suivi comme décrit ci-avant, comprenant une membrane à rupture perméable aux gaz et imperméable au fluide caloporteur, la membrane étant agencée et fixée dans l'accumulateur pour laisser passer les gaz dégagés par l'accumulateur à l'extérieur de ce dernier.

L'accumulateur peut comprendre une traversée formant borne, réalisée à travers un orifice débouchant de part et d'autre d'une paroi du boitier de l'accumulateur, comportant :
- une pièce électriquement conductrice, comprenant intérieurement un passage destiné à déboucher à l'extérieur de l'accumulateur, et un trou traversant qui rejoint l'intérieur de la pièce ;
- la membrane à rupture formant un évent de sécurité en cas de surpression des gaz, la membrane étant fixée, sur le trou traversant.

Avantageusement, la membrane est sous la forme d'un disque pris en sandwich sur le trou traversant au moyen d'une couronne en métal soudée sur la pièce électriquement conductrice.

La pièce électriquement conductrice est de préférence une pièce mâle faisant saillie du boitier d'accumulateur.

La pièce mâle est de préférence en cuivre nickelé ou en alliage d'aluminium,

Selon un mode avantageux, la traversée comprend :
- une pièce femelle électriquement conductrice, de forme annulaire, ajustée serrée autour d'une partie de la pièce mâle, à l'extérieur de l'accumulateur;
- deux rondelles électriquement isolantes, comportant chacune une portion d'appui en appui surfacique avec pression à la fois contre l'une des faces de la paroi et une portion de guidage en saillie par rapport à la portion d'appui et en contact avec le bord de l'orifice; la portion d'appui d'une rondelle étant en appui avec pression contre la pièce femelle; la portion d'appui de l'autre rondelle étant en appui avec pression contre une partie de la pièce mâle.

Selon une variante avantageuse de réalisation, la pièce mâle comprend:
- un filetage, destiné à coopérer par vissage avec un autre filetage pour la fixation et la sortie électrique de l'accumulateur ;
- un premier élargissement diamètre en dessous du filetage et qui sert de diamètre de sertissage à la pièce femelle, et
- un deuxième élargissement de diamètre dans la continuité du premier qui sert de surface à la fois d'appui avec la rondelle d'isolation électrique et de surface de connexion à un collecteur de courant destiné à faire la liaison électrique avec la cellule électrochimique de l'accumulateur.

La pièce mâle peut comprendre, dans sa partie inférieure, en dessous du deuxième élargissement de diamètre, une réduction de diamètre intégrant le trou traversant sur lequel est fixée la membrane à rupture.

La traversée peut être réalisée à travers le couvercle du boitier, qui est avantageusement en aluminium, tel que l'aluminium 1050 ou 3003.

Selon un mode de réalisation avantageux, la membrane à rupture est agencée dans le volume vide délimité entre le couvercle et le collecteur de courant de la liaison électrique entre la borne et la cellule électrochimique de l'accumulateur.

L'invention concerne sous un autre de ses aspects, une pièce d'interface mécanique et d'isolation électrique, destiné à réaliser l'interface mécanique et l'isolation entre deux accumulateurs électrochimiques métal-ion alignés selon leur axe longitudinal (X), chacun des deux accumulateurs comprenant un boitier avec un fond et un couvercle à travers lequel une traversée formant borne de sortie de l'accumulateur, la pièce étant en matériau isolant électrique et constituée par une collerette comprenant :
- un socle plan, adapté pour venir s'appliquer contre le couvercle d'un des deux accumulateurs, le socle plan étant percé d'une ouverture débouchante dont le diamètre est adapté à celui d'une pièce de la borne de sortie de l'accumulateur qui vient s'y loger ;
- une paroi annulaire entourant le socle plan et conformée pour délimiter d'une part une gorge annulaire de forme complémentaire avec celle du dessus d'un boitier d'un des accumulateurs, dont la forme du couvercle, de sorte à pouvoir s'y emmancher et d'autre part une surface d'appui avec le fond du boitier de l'autre des accumulateurs.

La gorge annulaire est avantageusement dimensionnée pour réaliser un emmanchement avec ajustement serré sur le dessus du boitier d'accumulateur.

Selon un mode de réalisation avantageux, la collerette comprend en outre une pluralité de pattes d'entretoise réparties à la périphérie de la paroi annulaire, les pattes étant adaptées pour garantir un écartement fixe avec un tube extérieur dans lequel sont logés coaxialement les accumulateurs alignés. De préférence, les pattes d'entretoise sont réparties uniformément selon un pas d'espacement e5.

Selon un autre mode de réalisation avantageux, la collerette est conformée de sorte à laisser un volume vide entre le socle plan qui s'applique contre le couvercle du boitier d'un des deux accumulateurs et le fond du boitier de l'autre des accumulateurs.

Avantageusement, la pièce est réalisée par injection d'une matière plastique, notamment un PA6-6 ou un polyoxyméthylène (POM).

L'invention concerne également un module d'accumulateurs, comprenant:
- au moins deux accumulateurs électrochimiques métal-ion alignés selon leur axe longitudinal (X) ;
- une pièce d'interface mécanique et d'isolation électrique décrite précédemment, agencée entre les deux accumulateurs.

Les deux accumulateurs sont en outre avantageusement assemblés entre eux par le biais de la borne de sortie d'un des accumulateurs vissée sur le mandrin creux de l'autre des accumulateurs, à travers le fond de ce dernier.

Avantageusement, il est prévu un module électronique supporté par le socle plan dans le volume vide ou intégré dans l'épaisseur du socle plan, le module électronique étant adapté pour monitorer les caractéristiques électriques de l'un ou l'autre des accumulateurs.

Selon une variante de réalisation avantageuse, le module électronique est alimenté électriquement d'une part par un fil d'une polarité, au travers de la collerette pour le relier électriquement au couvercle de l'accumulateur sur lequel le socle plan de la collerette s'appuie et d'autre par un autre fil d'alimentation électrique, de polarité opposée, pour le relier électriquement à une pièce de la borne de sortie de l'accumulateur.

L'invention concerne également un pack-batterie comprenant un ou une pluralité de modules d'accumulateurs décrits précédemment et un système de contrôle de l'ensemble des accumulateurs (BMS) auquel tous les accumulateurs sont reliés électriquement par un circuit électrique de puissance configuré de telle sorte que les remontées de tension des modules électroniques vers le BMS se font par courants porteurs en ligne (CPL) sur ledit circuit.

Chacun des modules électroniques peut être relié électriquement à un autre des modules électroniques par le biais d'un ou plusieurs fils électriques dit de redondance.

Chaque collerette peut avantageusement intégrer dans sa paroi latérale une connectique de liaison entre deux fils de redondance, l'un étant directement relié à un module électronique, l'autre étant relié à un autre module électronique.

De préférence, le fil relié entre la connectique et l'autre module électronique est fixé, notamment par collage, le long de la paroi de l'accumulateur adjacent à celui supportant le module électronique.

L'invention concerne encore sous un autre de ses aspects, une traversée formant borne pour accumulateur électrochimique métal-ion, réalisée à travers un orifice débouchant de part et d'autre d'une paroi du boitier de l'accumulateur, comportant :
- une pièce mâle électriquement conductrice, comprenant intérieurement un passage, destiné à faire circuler un fluide de refroidissement ayant circulé selon l'axe longitudinal de l'accumulateur, le passage étant débouchant vers l'extérieur de l'accumulateur ;
- une pièce femelle électriquement conductrice, ajustée serrée autour d'une partie de la pièce mâle, à l'extérieur de l'accumulateur;
- deux rondelles électriquement isolantes, comportant chacune une portion d'appui en appui surfacique avec pression à la fois contre l'une des faces de la paroi et une portion de guidage en saillie par rapport à la portion d'appui et en contact avec le bord de l'orifice; la portion d'appui d'une rondelle étant en appui avec pression contre la pièce femelle ; la portion d'appui de l'autre rondelle étant en appui avec pression contre une partie de la pièce mâle ;

Selon l'invention, la pièce mâle comprend:
- un filetage destiné à coopérer par vissage avec un autre filetage pour la fixation et la sortie électrique de l'accumulateur ;
- un premier élargissement diamètre en dessous du filetage et qui sert de diamètre de sertissage à la pièce femelle, et
- un deuxième élargissement de diamètre dans la continuité du premier qui sert de surface à la fois d'appui avec la rondelle d'isolation électrique et de surface de connexion à un collecteur de courant destiné à faire la liaison électrique avec la cellule électrochimique de l'accumulateur.

Selon un mode de réalisation avantageux, il est prévu en outre un cordon de soudure continu réalisé bord à bord entre les pièces mâle et femelle.

Selon une variante avantageuse, la pièce mâle comprend une gorge annulaire adaptée pour loger un joint d'étanchéité torique.

De préférence :
- la pièce mâle est en cuivre pur (CuA1), de préférence, avec un traitement de surface à base de nickel, ou en cuivre nickelé ou en alliage d'aluminium;
- la pièce femelle est en un grade d'aluminium 5754 ou en cuivre ou cuivre nickelé;
- les rondelles isolantes sont en polyéthèrimide (PEI).

L'invention concerne également un module d'accumulateurs, comprenant au moins deux accumulateurs décrits précédemment, les accumulateurs étant assemblés entre eux par le biais de la traversée formant borne de sortie d'un des accumulateurs vissée à un mandrin creux de l'autre des accumulateurs, à travers le fond de ce dernier.

La traversée est de préférence vissée dans le mandrin creux selon un couple de serrage au moins égal à 3 N.m.

L'invention concerne également un pack-batterie comprenant un ou plusieurs modules d'accumulateurs comme décrit précédemment.

L'invention concerne enfin sous un autre de ses aspects, un sous-ensemble pour accumulateur électrochimique métal-ion, comportant :
- une pièce électriquement conductrice d'une traversée formant borne de l'accumulateur, la pièce comprenant intérieurement un passage, destiné à déboucher vers l'extérieur d'une de ses extrémités de l'accumulateur;
- un mandrin d'axe longitudinal (X) et d'enroulement de la cellule électrochimique de l'accumulateur, le mandrin étant électriquement conducteur et comprenant intérieurement un passage, destiné à déboucher vers l'extérieur de l'accumulateur à l'autre de ses extrémités;
- un élément d'isolation électrique entre la pièce de borne électriquement conductrice et le mandrin d'enroulement électriquement conducteur, la pièce d'isolation comprenant un passage débouchant à la fois dans le passage de la pièce de borne et le passage du mandrin d'enroulement, les passages étant destinés à faire circuler un fluide de refroidissement de l'accumulateur.

Selon un mode de réalisation avantageux :
- l'élément d'isolation électrique comprend une collerette creuse prolongée par un cylindre creux;
- la pièce de borne comprend un élargissement de diamètre prolongée par un cylindre creux, dont une extrémité est emmanchée et fixée de manière étanche par rapport au fluide de refroidissement, dans le cylindre creux de l'élément d'isolation électrique;
- le mandrin est un cylindre creux, dont une extrémité est emmanchée et fixée de manière étanche par rapport au fluide de refroidissement, autour du cylindre creux de l'élément d'isolation électrique.

Selon un autre mode de réalisation avantageux, la pièce de borne, le mandrin et l'élément d'isolation électrique sont assemblés entre eux selon un procédé de soudage par impulsion magnétique, ou par collage, ou par frettage, ou par brasage.

Avantageusement, la pièce de borne comprend un filetage destiné à coopérer par vissage avec un autre filetage pour la fixation et la sortie électrique de l'accumulateur.

Avantageusement encore, le mandrin comprend un filetage destiné à coopérer par vissage avec un autre filetage pour la fixation et la sortie électrique de l'accumulateur.

Le mandrin est de préférence en aluminium, de préférence en aluminium pur à 99.5% (1050A).

L'invention concerne également une batterie ou accumulateur métal-ion comportant un sous-ensemble qui vient d'être décrit, dont la pièce de borne constitue une partie de traversée du couvercle de boitier de l'accumulateur, et dont le mandrin traverse le fond du boitier en y étant soudé.

L'invention concerne enfin un module d'accumulateurs, comprenant au moins deux accumulateurs comme ci-avant, les accumulateurs étant assemblés entre eux par le biais de la traversée formant borne de sortie d'un des accumulateurs vissée au mandrin creux de l'autre des accumulateurs, à travers le fond de ce dernier.

La traversée est avantageusement vissée dans le mandrin creux selon un couple de serrage au moins égal à 3 N.m.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue schématique en perspective éclatée montrant les différents éléments d'un accumulateur lithium-ion,
- la figure 2 est une vue de face montrant un accumulateur lithium-ion avec son emballage souple selon l'état de l'art,
- la figure 3 est une vue en perspective d'un accumulateur lithium-ion selon l'état de l'art avec son emballage rigide constitué d'un boitier de forme cylindrique;
- la figure 4 est une vue en en perspective d'un accumulateur lithium-ion selon l'état de l'art avec son emballage rigide constitué d'un boitier de forme prismatique;
- la figure 5 est une vue en perspective d'un assemblage au moyen de busbars d'accumulateurs lithium-ion selon l'état de l'art, formant un pack-batterie ;
- la figure 6 est une vue schématique en perspective d'un exemple d'un module (M) d'accumulateurs selon une première alternative de circuit caloporteur selon l'invention ;
- la figure 7 reprend la figure 6 et montre en outre un raccord étanche de circuit caloporteur;
- la figure 8 est une vue en perspective d'une variante du module (M) d'accumulateurs selon les figures 6 et 7;
- la figure 8A est une vue en coupe transversale selon A-A de la figure 8;
- la figure 9 est une vue schématique en perspective d'un exemple d'un module (M) d'accumulateurs selon la première et une deuxième alternative de circuit caloporteur selon l'invention ;
- la figure 10 est une vue en coupe axiale d'un exemple de réalisation de tubes logeant la pluralité d'accumulateurs d'un module (M) selon la première alternative de l'invention ;
- la figure 11 reprend la figure 10 et montre une variante de réalisation avec moyens de centrage des tubes ;
- la figure 12 est une vue en perspective montrant une autre variante de réalisation des moyens de centrage des tubes ;
- la figure 13 est une vue schématique en perspective d'un exemple d'une pluralité de module (M) d'accumulateurs formant un pack-batterie selon la première alternative de circuit caloporteur selon l'invention mais selon un mode distinct des figures 5 à 9 ;
- la figure 14 est une vue schématique d'une pluralité de module (M) d'accumulateurs selon l'invention reliés électriquement en série mais avec leurs circuits de caloporteurs reliés fluidiquement en parallèle ;
- la figure 15 est une vue schématique d'une pluralité de module (M) d'accumulateurs selon l'invention reliés électriquement en parallèle mais avec leurs circuits de caloporteurs reliés fluidiquement en série;
- la figure 16 est une vue en coupe transversale et en perspective d'un accumulateur selon un mode avantageux de l'invention ;
- la figure 17 est une vue de détail en coupe transversale et en perspective de la figure 16, réalisée au niveau d'une traversée formant borne de sortie et d'un mandrin d'enroulement d'une cellule électrochimique d'accumulateur, auquel la borne est fixée selon un mode avantageux de l'invention ;
- la figure 18 est une vue en perspective d'une borne de sortie selon les figures 16 et 17;
- la figure 19 est une vue en perspective d'une pièce de liaison mécanique et d'isolation électrique entre borne de sortie et mandrin selon les figures 16 à 18;
- la figure 20 est une vue en perspective d'un mandrin d'accumulateur selon les figures 16 et 17 ;
- la figure 21 est une vue en perspective d'un mandrin selon une variante de l'invention ;
- la figure 22 est une vue en coupe longitudinale d'un assemblage mécanique mais isolant électrique selon l'invention, entre une borne de sortie et un mandrin d'enroulement d'une cellule électrochimique d'accumulateur;
- la figure 23 montre une variante d'un assemblage selon la figure 22 ;
- la figure 24 est une vue de détail en perspective montrant le dessus d'une borne de sortie selon l'invention, formée en tant que traversée du couvercle d'un accumulateur ;
- la figure 25 reprend la figure 17 en montrant tous les éléments de la borne de sortie selon l'invention ;
- la figure 26 est une vue de détail en coupe longitudinale et en perspective d'un assemblage mécanique entre deux accumulateurs adjacents d'un même module selon l'invention, l'assemblage mécanique réalisé au moyen d'une borne de sortie selon l'invention permettant une liaison électrique en série des cellules des accumulateurs tout en isolant électriquement leurs boitiers respectifs ;
- la figure 27 est une vue de détail en coupe longitudinale reprenant la figure 26 ;
- la figure 28 est une vue en coupe transversale montrant deux accumulateurs adjacents assemblés mécaniquement entre eux en étant reliés en série électrique au moyen d'une borne de sortie selon l'invention ;
- la figure 29 est vue en perspective d'un exemple de collecteur de courant assurant la connexion électrique entre cellule d'accumulateur et borne de sortie ;
- la figure 30 est une vue en perspective d'une pièce d'interface formant une collerette pour l'isolation électrique entre accumulateurs reliés en série par la borne de sortie conformément à l'invention
- la figure 31 est une vue de détail en perspective et par transparence d'un accumulateur, réalisée au niveau du dessus de son boitier, la figure 31 montrant les parties de connexion électrique entre cellule électrochimique d'accumulateur et borne de sortie, ainsi que la pièce d'interface telle qu'elle est montée sur le dessus de boitier d'accumulateur;
- les figures 32 et 33 sont des vues de face respectivement de dessous et de dessus d'une collerette isolante selon l'invention ;
- les figures 32A et 33A sont des vues en coupe transversale selon A-A des figures 32 et 33 ;
- la figure 34 est une vue en perspective d'une collerette isolante selon l'invention avant son montage serré sur la partie supérieure du boitier d'un accumulateur ;
- la figure 35 est une vue de détail en coupe longitudinale et en perspective d'un accumulateur avec sa collerette montée serrée sur la partie supérieure du boitier d'un accumulateur ;
- la figure 36 est une vue en perspective de l'extérieur de deux accumulateurs assemblés entre eux en étant reliés en série électrique et avec une collerette isolante entre eux ;
- la figure 37 est une vue en perspective d'une partie d'un module complet (M) d'accumulateurs assemblés entre eux en étant reliés en série électrique et avec une collerette isolante entre deux accumulateurs adjacents;
- la figure 38 est une vue en coupe longitudinale de deux accumulateurs assemblés entre eux en étant reliés en série électrique et avec une collerette isolante entre eux et un tube de circuit caloporteur autour;
- la figure 39 est une vue en coupe longitudinale et en perspective montrant deux accumulateurs adjacents assemblés mécaniquement entre eux en étant reliés en série électrique au moyen d'une borne de sortie selon l'invention et avec une collerette isolante entre eux ;
- les figures 40A et 40B sont des vues respectivement en coupe longitudinale et en perspective reprenant la figure 39, ces figures montrant le volume utile d'une collerette selon l'invention ;
- les figures 41A et 41B sont des vues respectivement en perspective et en coupe longitudinale reprenant la figure 39, ces figures montrant une variante de réalisation selon laquelle la collerette sert de support d'un module électronique sous la forme d'un microcontrôleur;
- la figure 42 est une vue en coupe longitudinale reprenant la figure 39, cette figure montrant une variante de réalisation selon laquelle un module électronique sous la forme d'un microcontrôleur inséré à l'intérieur de la collerette;
- la figure 43 illustre un schéma électrique équivalent d'un ou plusieurs modules d'accumulateurs selon l'invention avec un BMS, et des microcontrôleurs supportés ou insérés dans les collerettes ;
- la figure 44 est une vue de détail schématique en coupe montrant le départ d'une liaison électrique de redondance avec sa connectique d'un microcontrôleur supporté dans une collerette d'un accumulateur vers un microcontrôleur d'un accumulateur adjacent ;
- la figure 45 est une vue en coupe longitudinale et en perspective montrant deux accumulateurs adjacents assemblés mécaniquement entre eux en étant reliés en série électrique au moyen d'une borne de sortie selon l'invention et avec une collerette isolante entre eux, et une liaison électrique de redondance entre les microcontrôleurs des deux accumulateurs ;
- la figure 46 illustre un schéma électrique équivalent d'un ou plusieurs modules d'accumulateurs selon l'invention avec un BMS, des microcontrôleurs supportés ou insérés dans les collerettes et la liaison électrique de redondance;
- la figure 47 est un schéma de principe montrant la réalisation du circuit fermé d'un fluide caloporteur au sein d'un ou plusieurs modules d'accumulateurs selon l'invention avec vase d'expansion intégrant un dispositif de sécurité ;
- la figure 48 est une vue en perspective et en éclaté d'une borne de sortie d'accumulateur intégrant un évent de sécurité selon l'invention ;
- la figure 49 reprend la figure 48 et montre l'évent de sécurité fixé et en configuration de fonctionnement sur la borne de sortie selon l'invention ;
- la figure 50 est une vue en perspective d'un exemple de réalisation avantageux d'un évent de sécurité à intégrer et fixer à une borne de sortie selon l'invention ;
- la figure 51 est une vue de détail en coupe longitudinale et en perspective d'un accumulateur réalisé au niveau d'une borne de sortie intégrant un évent de sécurité selon l'invention ;
- les figures 52 à 55 sont des vues issues de la simulation numérique d'un exemple d'accumulateur refroidi selon l'état de l'art à l'air et selon les circuits de caloporteur selon l'invention.

Les figures 1 à 5 sont relatives à des exemples différents d'accumulateur Li-ion, de boitiers et traversées formant des bornes ainsi qu'un pack-batterie selon l'état de l'art. Ces figures 1 à 5 ont déjà été commentées en préambule et ne le sont donc pas plus ci-après.

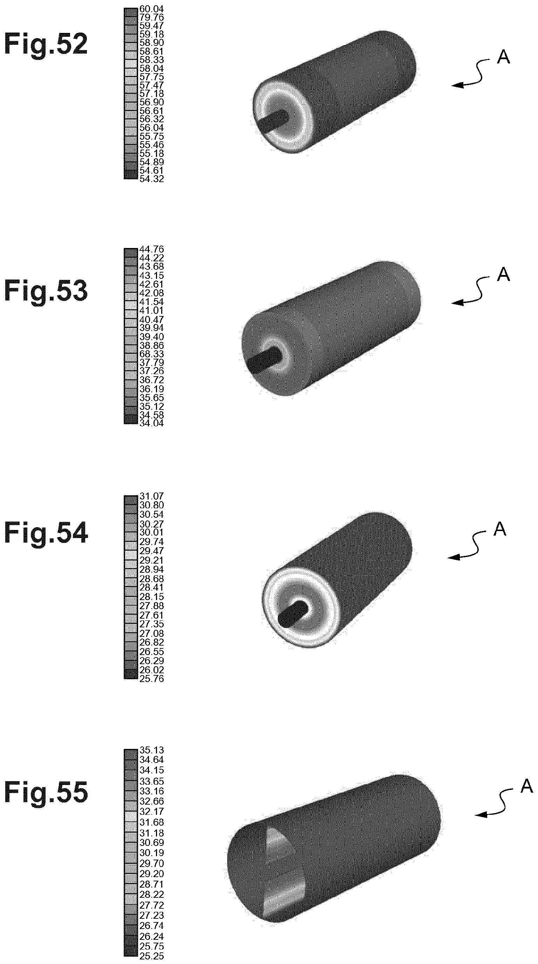

Par souci de clarté, les mêmes références désignant les mêmes éléments selon l'état de l'art et selon l'invention sont utilisées pour toutes les figures 1 à 55.

Dans l'ensemble de la présente demande, les termes « inférieur », « supérieur », « bas », « haut », « dessous » et « dessus » sont à comprendre par référence par rapport à un boitier d'accumulateur Li-ion positionné à la verticale avec son couvercle sur le dessus et une traversée formant borne de sortie faisant saillie à l'extérieur du boitier vers le haut.

On a représenté en figures 6 à 9, un exemple de module M de pluralité d'accumulateur Li-ion A à boitiers, selon une première alternative de l'invention.

L'empilement d'accumulateurs A1-A4 alignés les uns à la suite des autres et reliés entre eux en série électrique est logé dans une enveloppe à double-paroi 10.

Les accumulateurs A1-A4 illustrés sont de format cylindrique.

Plus précisément, l'enveloppe à double-paroi 10 est constituée de deux tubes concentriques 11, 12, agencés de manière coaxiale autour des accumulateurs. L'espace entre le tube intérieur 11 et le tube extérieur 12 délimite un volume de fluide caloporteur sur toute la périphérie des boitiers d'accumulateurs.

L'enveloppe 10 peut constituer un réservoir à double-paroi fermée 11, 12 remplie par un matériau à changement de phase (MCP) de type solide-liquide. On peut ainsi générer une température de liquide constante sur toute la longueur de l'enveloppe 10, et donc sur toutes les hauteurs des accumulateurs A1-A4.

Au lieu d'un réservoir fermé, l'enveloppe 10 peut être un conduit à double-paroi, débouchante à l'une de ses extrémités 13 par un orifice d'amenée 15 de fluide caloporteur et à l'autre de ses extrémités 14 par un orifice de sortie 16 du fluide. Ainsi, on peut faire circuler un fluide caloporteur C1 sur toute la périphérie des boitiers d'accumulateurs, depuis l'orifice d'amenée 15 jusqu'à l'orifice de sortie 16.

Un ou plusieurs éléments de compression, tels que des ressorts ou lames, peuvent être agencés à l'intérieur du tube intérieur 11 et à l'une ou aux deux extrémités 13, 14 du tube 11 afin d'assurer le positionnement longitudinal de l'ensemble à l'intérieur du tube tout en garantissant l'isolation électrique vis-à-vis du tube qui doit rester à un potentiel neutre, c'est-à-dire différent du pole positif du boitier ou du pole négatif de la borne traversant le couvercle.

Le tube intérieur peut être soit un tube distinct 11 des boitiers 6 d'accumulateurs, soit être délimité par les enveloppes latérales des boitiers 6. Autrement dit, lorsqu'il s'agit d'un tube distinct 11, les accumulateurs A1-A4 sont emmanchés à l'intérieur de celui-ci, de préférence avec contact direct.

A contrario, les enveloppes latérales de boitiers 6 d'accumulateurs A1-A4 aligné peuvent délimiter le tube intérieur 11. Cette variante de réalisation permet de supprimer un tube intérieur et donc de diminuer la résistance thermique entre fluide caloporteur et accumulateurs A1-A4, ce qui génère par conséquent de meilleurs échanges thermiques.

Comme montré par transparence sur les figures 6 à 8, la connexion électrique en série se fait avantageusement par une borne de sortie 5 qui fait saillie du boitier 6 d'un accumulateur, avec le fond 8 du boitier 6 d'un accumulateur adjacent et la sortie électrique du module M se fait d'une part par la borne de sortie 5 de l'accumulateur A4 à une extrémité 13 et par le fond de l'accumulateur A1 à l'autre extrémité 14. Un mode de réalisation avantageux de borne de sortie 5 conforme à l'invention est décrit plus loin.

L'alimentation en fluide caloporteur, qui est un fluide réfrigérant (liquide ou gaz ou fluide frigorigène) lorsqu'on souhaite refroidir les accumulateurs A1-A4 en fonctionnement, peut se faire directement avec des flexibles ou autres que l'on manchonne puis que l'on fixe aux extrémités 13, 14 du module. La fixation peut être assurée par vissage, soudage ou brasage.

En fonction de la nature de fluide caloporteur utilisé (conducteur ou diélectrique), il y a différentes manières de procéder pour les connexions électriques. Ainsi, il y a plusieurs variantes possibles pour sortir la connectique et alimenter électriquement les accumulateurs A1-A4 à l'intérieur du conduit 10 à double-paroi.

S'il s'agit d'un fluide diélectrique, ce n'est pas problématique si celui-ci se retrouve en contact avec les bornes de sortie 5 de l'accumulateur, on peut sortir les connectiques par un raccord étanche qui traverse la double-paroi 11, 12. Un exemple de manchon 17 de raccordement étanche pour un fluide diélectrique est montré en figure 7.

Ce manchon de raccord étanche 17 traverse longitudinalement l'intérieur d'une extrémité 13 de la double-paroi 11, 12.

A titre de variante, si on veut éviter tout contact entre le fluide caloporteur et les connectiques, on peut envisager des manchons qui viennent se rapporter chacun sur un collecteur de fluide 18, 19 traversant latéralement une extrémité 13, 14 de la double-paroi. Dans ce cas, deux éléments de fermeture 20, 21 étanches viennent obturer chacun longitudinalement une extrémité 13, 14 de la double-paroi.

Ainsi, l'alimentation et la collecte du fluide caloporteur C1 se font latéralement, le fluide caloporteur n'étant plus en contact potentiel avec la borne de sortie 5 de l'accumulateur A4.

L'élément de fermeture 20 peut en outre constituer directement une des deux bornes de sortie du module M. Dans ce cas, il convient de l'isoler électriquement des tubes 11, 12. Pour ce faire, comme montré en figues 8 et 8A, on agence un bloc de matériau isolant 22 autour de la borne 5 et de l'élément de fermeture 20. Un bloc isolant similaire, non représenté est agencé à l'autre extrémité du module.

Une deuxième alternative selon l'invention pour gérer la thermique d'un module M consiste à faire circuler un fluide caloporteur dans l'ensemble des cœurs d'accumulateurs A1-A4.

Selon cette deuxième alternative, il s'agit de réaliser un écoulement continu de ce fluide au travers de l'ensemble des mandrins qui ont pour fonction première de servir de noyau d'enroulement d'une cellule électrochimique avent son logement dans un boitier d'accumulateur. Autrement dit, les mandrins sont creux et servent également de conduit de circulation de fluide caloporteur, l'ensemble des creux étant raccordé hydrauliquement en série au sein d'un même module M.

Du fait, que les deux circuits de fluide caloporteur sont indépendants au sein d'un même module M, on peut donc utiliser l'un ou l'autre ou encore les combiner, c'est-à-dire avoir une circulation de fluide caloporteur sur toute la périphérie des boitiers 6 d'accumulateur et une circulation complémentaire de fluide caloporteur au cœur des accumulateurs.

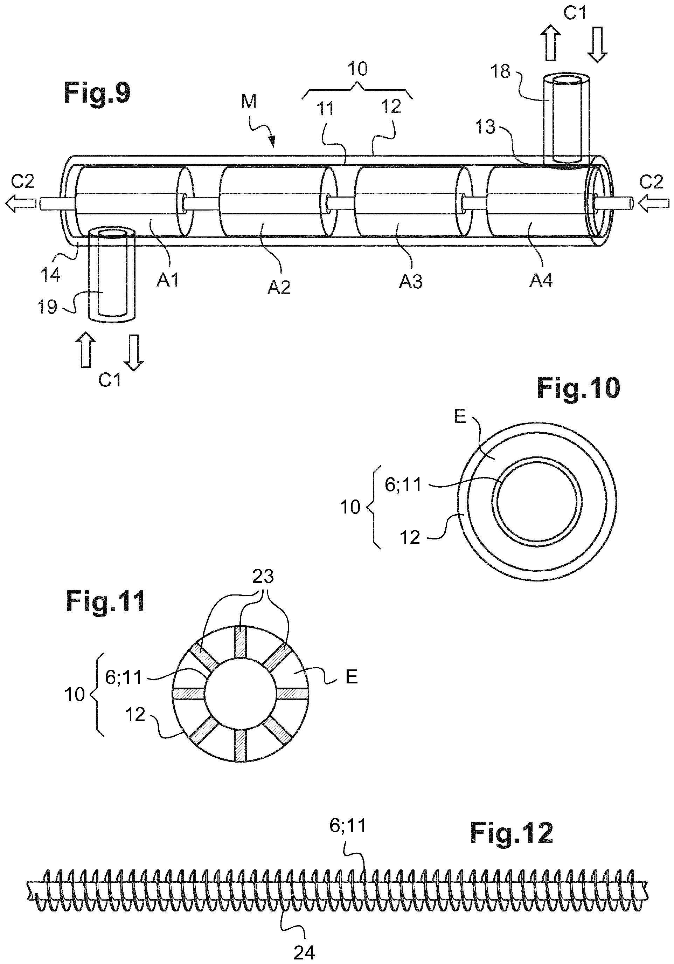

Comme symbolisé par les flèches de la figure 9, l'invention permet donc d'avoir une circulation combinée d'un fluide caloporteur C1 en périphérie des accumulateurs A1-A4 avec un fluide caloporteur C2 au cœur des accumulateurs A1-A4.

Les fluides caloporteurs C1 et C2 peuvent être le même fluide ou être distincts. En fonction de la géométrie et/ou de la chimie des cellules électrochimiques, on peut ainsi choisir un fluide C1 avec des caractéristiques thermiques ou diélectriques, différentes de celles du fluide C2.

Comme également symbolisé par les flèches de la figure 9, la circulation du fluide C1 peut être à co-courant de celle de C2 ou encore en sens inverse d'écoulement, c'est-à-dire en contre-courant de C2. Cette circulation en contre-courant peut rendre la température des accumulateurs A1-A4 d'un même module encore plus homogène.

Comme schématisé sur la figure 10, un conduit 10 à double-paroi selon l'invention est donc constitué d'un tube intérieur 11 soit rempli d'accumulateurs A1-A4 au contact de sa paroi interne, soit délimité par les enveloppes latérales des boitiers 6 et d'un tube extérieur 12 concentrique au tube intérieur 11, 6. L'espace annulaire E entre tube interne 11 et tube externe 12 défini donc la section de passage du fluide caloporteur C1. Typiquement, l'espace annulaire E peut varier avantageusement entre 1 mm et 20 mm, en fonction de la taille et de la puissance des accumulateurs.

Afin de s'assurer que le fluide puisse s'écouler dans l'espace annulaire E délimité entre ces deux tubes 11, 12, des moyens de centrage entre eux doivent être prévus.

Les moyens de centrage peuvent consister en des ailettes ou inserts 23 de forme droite, fixés sur au moins l'un des deux tubes 11, 12 qui s'étendent selon l'axe des tubes en étant répartis uniformément angulairement comme montré en figure 11.

Ces ailettes ou inserts 23 ont en outre l'avantage de pouvoir augmenter la surface d'échange avec le fluide caloporteur C1 qui va circuler dans l'espace annulaire E. Typiquement, en choisissant un matériau constitutif des ailettes 23 qui soit un bon conducteur thermique (aluminium, cuivre,...), on peut être en mesure de multiplier la surface d'échange entre le fluide C1 et le tube interne 11 d'un facteur 1 à 5 environ, et donc de réduire l'écart de température entre le fluide C et les accumulateurs A1-A4 d'un même facteur. Il va de soi qu'on veille à dimensionner des ailettes ou inserts 23 de telle sorte qu'ils n'obstruent pas la section de passage du fluide C1 afin d'avoir des pertes de charge acceptables. Dans le cadre de l'invention, il faut aussi veiller à ne pas réaliser un court-circuit via le tube si les ailettes sont conductrices électriques.

La figure 12 montre une variante de réalisation selon laquelle une seule ailette hélicoïdale 24 est sertie autour du tube interne 6, 11. Cette ailette hélicoïdale 24 permet également d'augmenter la surface d'échange et d'intensifier l'échange thermique, du fait de l'hélice 24 qui permet en outre une mise en rotation du fluide caloporteur.

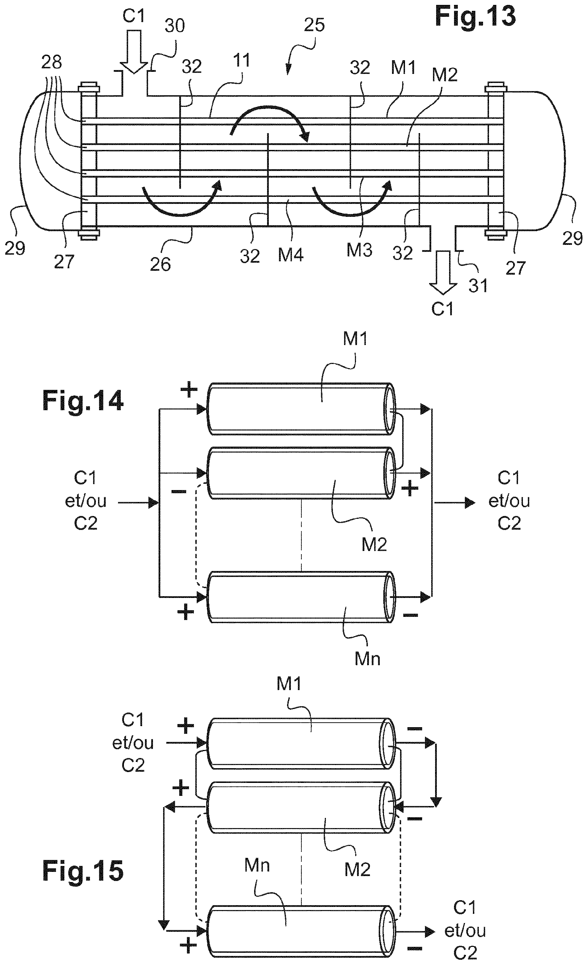

Pour assurer une circulation périphérique autour d'accumulateurs A1-A4 assemblés en modules M selon l'invention, on peut envisager de remplacer les conduits à double-paroi 10 par un échangeur de type tubulaire 25, comme celui schématisé en figure 13.

Dans cet échangeur 25, un faisceau de modules (M1, M2, M3, M4...) d'accumulateurs est logé dans un corps creux étanche formant une calandre 26 qui va jouer le rôle de paroi extérieure de guidage du fluide caloporteur tandis que la paroi intérieure est assurée pour chaque module (M) par un seul tube 11 à l'intérieur duquel sont logés les accumulateurs alignés et reliés électriquement en série. Avec un tel échangeur 25, il n'y a plus d'écoulement périphérique dans une double-paroi 10 et le fluide caloporteur chemine à l'extérieur des tubes 11.

Plus précisément, l'échangeur 25 comprend deux plaques tubulaires 27 de maintien percées chacune d'une pluralité d'orifices 28 parallèles entre eux. Le nombre d'orifices est égal à celui de la pluralité de tubes 11 des modules (M) d'accumulateurs.

Chacune des deux extrémités de chaque tube 11 est engagée dans un orifice de maintien 28 d'une plaque tubulaire 27 en étant fixé de manière étanche à cette dernière. ;

La calandre 26 est fixée de manière étanche autour des plaques tubulaires 27 pour délimiter le circuit de caloporteur. La calandre 26 comprend à l'une de ses extrémités un orifice d'amenée 30 de fluide caloporteur et à l'autre de ses extrémités un orifice de sortie 31 de fluide.

En outre, des chicanes 32 sont agencées à l'intérieur de la calandre 26 pour le guidage de l'écoulement du fluide caloporteur C1. Comme illustré, les chicanes 32 sont constituées par des plaques s'étendant transversalement aux tubes 11 et parallèlement aux plaques tubulaires d'extrémité 27, en étant régulièrement espacées le long des tubes et fermant une partie de la section transversale de la calandre, pour guider le fluide caloporteur autour des tubes 11 des modules d'accumulateur (M1, ...M4). Les chicanes permettent alors également de supporter la masse des tubes 11 remplis d'accumulateurs (A1-A4) et évitent ainsi le fléchissement des tubes 11 sous le poids des accumulateurs.

Enfin, de part et d'autre des plaques de maintien 27, deux collecteurs électriques 29 permettent de loger une pluralité de connexions électriques reliées à la pluralité de modules d'accumulateurs M1-M4 pour relier électriquement tous ces modules entre eux.

En fonction du type d'applications, on peut aussi réaliser l'échangeur 25 avec une circulation au cœur de chacun des accumulateurs A1-A4 des modules M1-M4, les collecteurs électriques 29 jouant alors aussi le rôle de collecteur fluidique.

Autrement dit, l'échangeur 25 refroidi par le fluide caloporteur C autour des accumulateurs A1-A4 de chaque module et éventuellement au cœur de chacun d'entre eux, constitue en lui-même, une fois les branchements électriques en série ou en parallèle entre les différents modules M1 à M4, un pack-batterie.

Un module M d'accumulateurs formé selon l'invention constitue un ensemble autonome avec un nombre de X d'accumulateurs en série que l'on peut aisément manipuler, mettre en place où l'on souhaite connecter fluidiquement et électriquement avec d'autres modules d'accumulateurs selon l'invention.

Ainsi, en fonction des caractéristiques d'un pack-batterie que l'on souhaite obtenir, on va relier électriquement entre eux un nombre Y de modules M d'accumulateurs.

Toutes les combinaisons de liaison électrique et fluidique entre plusieurs modules selon l'invention sont possibles.

En fonction de la chaleur dissipée par les accumulateurs, de l'homogénéité de température souhaitée d'un accumulateur à l'autre, des propriétés physiques du fluide caloporteur utilisé, on combine les modules M en série ou parallèle fluidique. En effet, le fluide s'échauffe au fur et à mesure et on peut alors avoir des écarts de température entre le premier et le dernier accumulateur d'un même module.

La figure 14 illustre une configuration de pack-batterie P selon laquelle la circulation du fluide caloporteur C1 et/ou C2 est assurée en parallèle entre tous les modules M1, M2...Mn tandis qu'ils sont reliés en série électrique entre eux.

La figure 15 illustre une configuration de pack-batterie P selon laquelle la circulation du fluide caloporteur C1 et/ou C2 est assurée en série entre tous les modules M1, M2...Mn tandis qu'ils sont reliés en parallèles électrique entre eux. Une circulation de fluide caloporteur uniquement en série a pour avantage de ne pas induire de problème dans la distribution de fluide puisque tous les accumulateurs sont au contact du même débit de fluide, sauf si le fluide s'échauffe le long de l'écoulement.

Afin de réaliser un montage électrique en série de plusieurs accumulateurs au sein d'un même module qui vient d'être décrit, une solution consiste à les connecter en reliant une borne 5 au centre du couvercle 9 de boitier d'un accumulateur à la borne opposée 4 située sur le fond 8 du boitier d'un accumulateur adjacent.

Pour réaliser une circulation de fluide caloporteur continue au cœur des cellules électrochimiques des accumulateurs A1-A4 d'un même module M, les inventeurs ont pensé à réaliser un sous-ensemble creux 33 comprenant un mandrin creux 34 et une partie de borne de sortie creuse 5 dans la continuité du mandrin creux 34. Ce sous-ensemble doit induire un minimum voire pas de perte de charge pour la circulation du caloporteur. En outre, il doit garantir une parfaite étanchéité avec l'intérieur de l'accumulateur, afin d'éviter tout contact entre le fluide caloporteur et l'électrolyte de l'accumulateur.

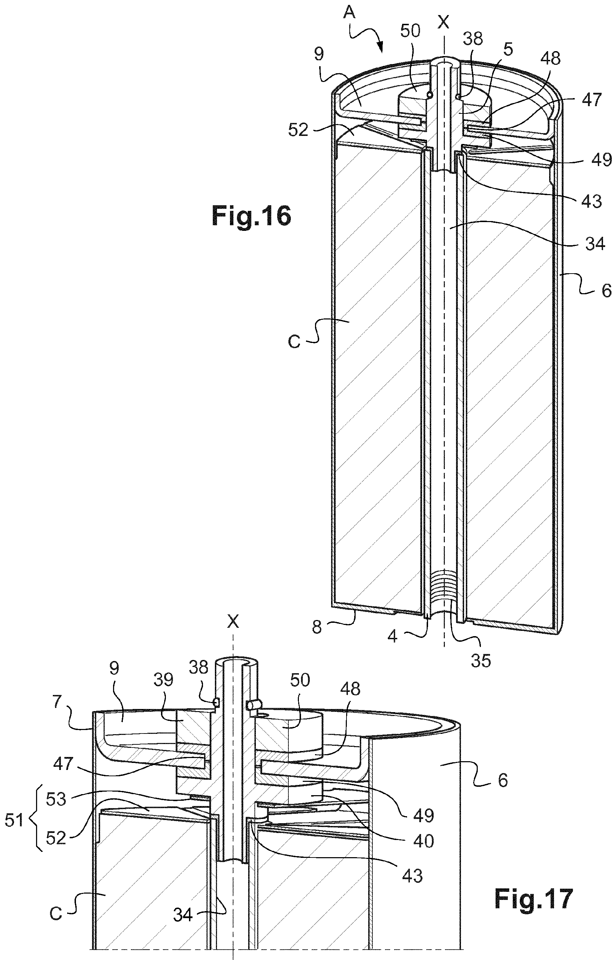

Un sous-ensemble 33 est montré avec ses composants 5, 34, 43 en figures 16 à 23.

Les figures 16 et 17 montrent l'intérieur d'un accumulateur A qui intègre en son sein un tel sous-ensemble 33.

Le mandrin creux 34 conserve sa fonction première et supporte la cellule électrochimique C qui est enroulée autour lors de son bobinage. Le diamètre du mandrin 34 respecte ainsi les conditions de bobinage d'une cellule C afin de générer les performances électrochimiques souhaitées de l'accumulateur.

Pour assurer avantageusement la liaison électrique et mécanique avec une borne 5, l'extrémité 35 du mandrin 34 opposée à celle en liaison avec la borne 5, comprend un filetage 35. Le mandrin 34 fileté et le fond 8 du boitier 6 constituent donc l'autre borne 4 de l'accumulateur, typiquement la borne positive dans le cas d'un accumulateur Li-ion.

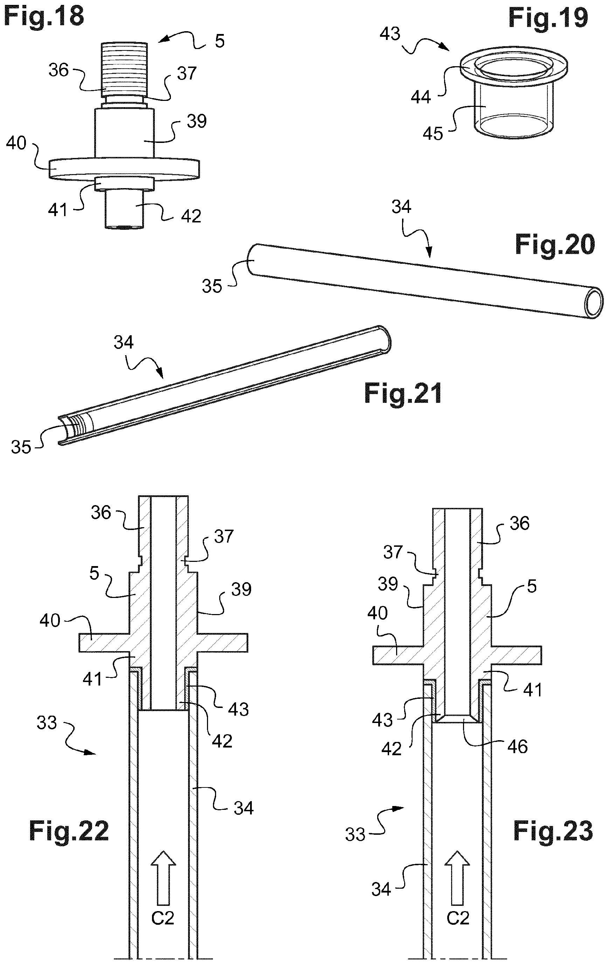

La pièce 5, creuse en son centre, qui forme une partie mâle de la borne de sortie est montrée à elle seule en figure 18. Elle comprend tout d'abord dans sa partie supérieure un filetage 36 adapté pour coopérer avec le filetage 35 du mandrin 34 d'un accumulateur adjacent pour réaliser la liaison électrique et mécanique entre deux accumulateurs.

Une gorge 37 est réalisée en dessous du filetage 36, afin de pouvoir y loger un joint d'étanchéité 38, par exemple en PTFE. Dans la continuité de la gorge 37, la pièce 5 comprend un premier élargissement de diamètre 39 qui sert de diamètre de sertissage d'une pièce femelle 50 de la borne de sortie comme décrit ci-après, et un deuxième élargissement de diamètre 40 dans la continuité du premier qui sert de surface à la fois d'appui avec une rondelle d'isolation électrique et de surface de connexion à un collecteur de courant qui fait la liaison électrique avec la cellule comme décrit ci-après.

Enfin, dans sa partie inférieure, la pièce 5 comprend deux réductions de diamètre 41, 42 dont celle d'extrémité est adaptée pour être emmanchée à l'intérieur du mandrin 34.

Pour garantir la polarité interne à l'accumulateur A, afin de ne pas créer de court-circuit et provoquer un emballement thermique, il est impératif d'isoler électriquement au sein du sous-ensemble 33, la borne 4 constituée par le mandrin creux 34, typiquement la borne positive, de la pièce de borne creuse 5, typiquement la borne négative.

Pour ce faire, le sous-ensemble creux 33 comprend une pièce de liaison mécanique et d'isolation électrique 43 montrée en détail en figure 19.

Elle comprend dans sa partie supérieure une collerette 44 et dans sa partie inférieure un cylindre 45. Le dimensionnement des pièces et leur positionnement sont choisis de sorte que la collerette 44 s'étend au-dessus du socle 52 de collecteur de courant 51 décrit par la suite.

Cette pièce de liaison 43 étant en matériau électriquement isolant, il est nécessaire de garantir un assemblage mécaniquement robuste et parfaitement étanche de cette pièce 43 avec la pièce borne 5 et le mandrin 34 tous deux en matériau électriquement conducteur.

Aussi, les inventeurs ont pensé à utiliser la technique de soudage par impulsion magnétique (« Magnetic Pulse Welding » en anglais), qui est un procédé basé sur l'utilisation de forces électromagnétiques pour souder des pièces entre elles. Un tel procédé consiste à agencer les différentes pièces à souder dans une bobine d'induction mais sans contact avec celle-ci. Durant le cycle de soudage, une très grande quantité d'énergie électrique est libérée en un laps de temps très court. Ainsi, le flux élevé d'énergie traverse la bobine et cette décharge de courant induit des courants de Foucault dans la pièce externe à souder. Ces deux courants créent un champ magnétique. La répulsion entre les deux champs magnétiques développe une force qui donne une très grande accélération à la pièce externe à souder en direction de la pièce interne. Une telle force pousse les atomes des matériaux les uns contre les autres de telle sorte qu'on obtient un assemblage métallique entre pièces interne et externe.

Du fait que le procédé de soudage par impulsion magnétique est un procédé de soudage froid, selon lequel les matériaux à souder n'atteignent pas plus de 30 °C, aucune zone des pièces n'est affectée thermiquement et le matériau ne perd pas ses propriétés. Ceci signifie qu'après soudage, les pièces peuvent être immédiatement débloquées et mises en œuvre. L'absence de chaleur durant le cycle de soudage permet d'assembler des matériaux ayant un point de fusion très différent. En outre, durant le cycle de soudage par impulsion magnétique, le métal d'une pièce n'est pas mis en fusion. Enfin, une soudure réalisée par impulsion magnétique est plus résistante que le métal de base le plus faible.

Un sous-ensemble creux 33, réalisé par un procédé de soudage par impulsion magnétique, garantit d'une part la parfaite étanchéité entre l'électrolyte présent dans l'accumulateur et le fluide caloporteur qui va circuler à l'intérieur du sous-ensemble et d'autre part la parfaite isolation électrique entre les polarités de l'accumulateur entre le couvercle et le fond.

D'autres techniques d'assemblage du sous-ensemble 33 par collage, frettage ou brasage sont aussi envisageables.

Pour les matériaux du sous-ensemble creux 33, on peut envisager avantageusement différentes combinaisons.

Ainsi, la pièce mâle 5, de préférence réalisée par usinage monobloc, peut être en aluminium ou en cuivre. De préférence encore, le matériau est du cuivre pur (CuAl. Pour des questions de corrosion, un traitement de surface à base de Nickel peut être déposé à la surface. Les élargissements de diamètre 39, 40 peuvent être rapportés sur la pièce 5 usinée par soudure laser ou par frettage dans l'optique de réduire le coût d'usinage/matière. Enfin, la hauteur de la pièce 5 est optimisée, afin de ne pas usiner de grande longueur mais également dans le but de réduire les coûts matière.

Le mandrin creux 34, de préférence réalisée par extrusion, est de préférence en aluminium. De préférence encore, le matériau est de l'aluminium pur à 99.5% (1050A) qui est usuellement le matériau du godet 7 et du fond 8 d'un boitier 6 d'accumulateur. Cela permet d'avoir la meilleure compatibilité chimique pour la soudure, notamment par laser, entre le mandrin 34 et le fond 8.

La pièce d'isolation électrique et liaison mécanique 43 est de préférence en plastique rigide à très bonne inertie chimique, et de préférence réalisée par usinage ou par injection. La pièce 43 est de préférence en polypropylène (PP) ou en polyétherimide (PEI), qui ont comme avantage d'être résistants avec les électrolytes usuels d'accumulateurs et une huile en tant que fluide caloporteur tout en ayant de bonnes caractéristiques mécaniques à la déformation. La pièce 43 peut subir un traitement de revêtement, par exemple avec un mélange de ferrite et de résine isolante, afin de la rendre ferromagnétique pour appliquer la soudure tout en restant isolante d'un point de vue passage du courant.

Les jeux mécaniques au montage avant assemblage par soudage entre les trois pièces 5, 34, 43 sont choisis pour garantir l'emmanchement des pièces entre elles mais également assurer l'étanchéité. Par exemple, on peut dimensionner une pièce mâle 5 de borne en cuivre avec un ajustement de type g6 sur sa réduction 41 de diamètre égal à 5 mm et un mandrin 34 en aluminium de diamètre intérieur 5 mm avec un ajustement de type H7 afin de permettre un montage serrant entre les trois pièces 5, 34, 43 qui soit possible d'effectuer à la main.

Comme montré en figure 22, le sous-ensemble creux 33 définit intérieurement un passage continu et étanche du fluide caloporteur C2 sur toute la hauteur de l'accumulateur.

Pour faciliter encore la circulation du fluide caloporteur C2 dans le sens montré en figures 22 et 23, on peut avantageusement munir l'intérieur de la partie réduction de diamètre 41 en bout de celle-ci d'un chanfrein 46. A titre d'exemple, pour les dimensions indiquées ci-dessus, le chanfrein 46 est de 1 mm de hauteur, avec une inclinaison de 45°.

Afin de garantir la meilleure liaison électrique possible entre deux accumulateurs tout en évitant tout risque de court-circuit et en garantissant le passage étanche du fluide caloporteur au cœur des accumulateurs, les inventeurs ont proposé une borne de sortie sous la forme d'une traversée déjà décrite en partie ci-dessus.

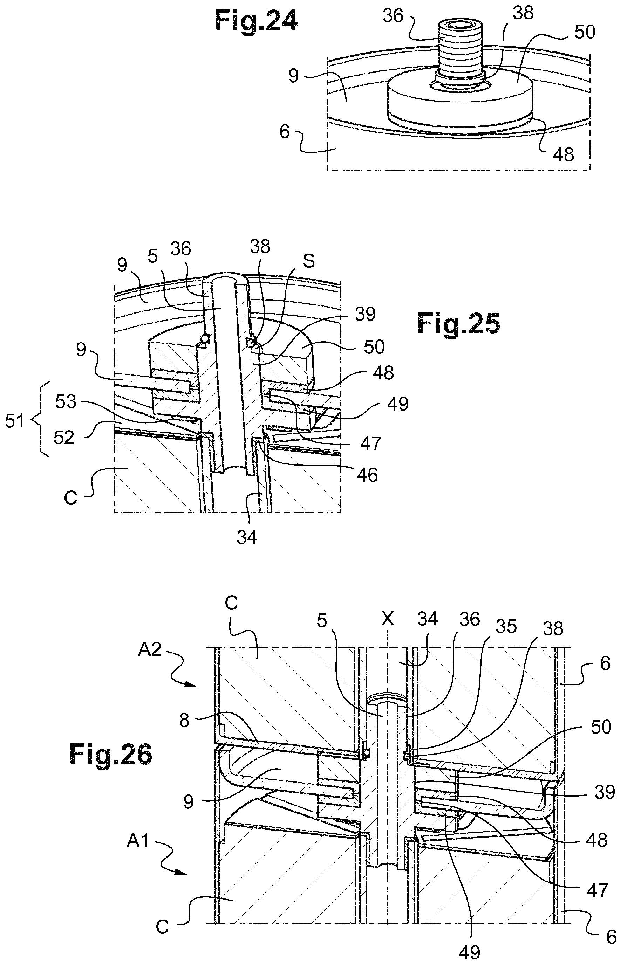

La traversée formant borne de sortie est décrite maintenant dans son ensemble en référence aux figures 24 à 28.

La traversée est réalisée à travers un orifice 47 débouchant de part et d'autre d'un couvercle 9 d'un boitier d'accumulateur A.

La traversée comporte tout d'abord deux rondelles 48, 49 électriquement isolantes identiques. Ces deux rondelles isolantes 48, 49 ont comme fonction d'assurer l'étanchéité vis-à-vis de l'électrolyte au sein de l'accumulateur sur lequel la traversée est réalisée, vis-à-vis de l'extérieur du couvercle 9. De plus, elles assurent l'isolation électrique entre la pièce mâle 5 de la borne et le couvercle 9.

Pour ce faire, chaque rondelle comporte une portion d'appui et une portion de guidage en saillie par rapport à la portion d'appui. La portion d'appui de la rondelle supérieure est en appui surfacique avec pression contre la face supérieure du couvercle 9 et sa portion de guidage est en contact avec le bord de l'orifice 47 du couvercle 7. De manière similaire, la portion d'appui de la rondelle 49 inférieure est en appui surfacique avec pression contre la face inférieure du couvercle 7 et sa portion de guidage est en contact contre le bord de l'orifice 47 du couvercle 7.

La pièce mâle électriquement conductrice 5 est ajustée serrée par son élargissement de diamètre 39 dans une pièce annulaire femelle 50, débouchante en son centre, qui est également conductrice.

Dans la configuration assemblée, la pièce annulaire femelle 50 est donc sertie autour du diamètre élargi 39 de la pièce mâle 5 et en appui avec pression contre la rondelle isolante supérieure 48.

Comme visible sur la figure 24, les différentes dimensions des composants de la borne sont telles que, dans cette configuration assemblée, le filetage 36 dans la partie supérieure de la pièce mâle 5 fait saillie au-delà de la pièce femelle 50 et le joint torique d'étanchéité 38 est interposé entre eux.

Ainsi, comme montré aux figures 26 à 28, cette pièce femelle 50 par sa surface annulaire permet d'assurer la connexion électrique entre la borne 5, 50, typiquement au pôle négatif, d'un accumulateur A2 et le fond 8 du boitier 6 de l'accumulateur adjacent A1 au pôle positif par un plat assurant la section de passage à de forts courants.

Le filetage 36 sert quant à lui de connexion entre la borne de sortie d'un accumulateur A2 avec le fond 8 de boitier 6 d'un accumulateur adjacent A2. Plus précisément, le filetage 36 qui coopère par vissage avec le filetage 35 d'un mandrin creux 34 permet de garantir un niveau de serrage important, typiquement de l'ordre de 3N/m entre deux accumulateurs A1, A2 adjacents, et donc une résistance de contact moindre, de l'ordre de 12 à 15 mohm.

Le joint torique 38 assure donc l'étanchéité du fluide caloporteur C2 au niveau de cette jonction filetée 35, 36, le serrage du joint étant maitrisé par l'ajustement entre le fond de la gorge 37 et le diamètre intérieur du mandrin creux 34.

Pour procéder à l'assemblage d'une traversée avec un couvercle 9 de boitier d'accumulateur, on réalise les étapes suivantes :
- positionnement de la rondelle isolante inférieure 49 autour de l'élargissement de diamètre 39 de la pièce mâle 5 conductrice, creuse et débouchante intérieurement, avec mise en appui de la portion d'appui de la rondelle 49 contre l'élargissement diamètre 40 de la pièce 5;
- positionnement du couvercle 9 avec son orifice 47 autour de la portion de guidage de la rondelle isolante 9 ;
- positionnement de la rondelle isolante supérieure 48 autour de l'élargissement de diamètre 39 de la pièce mâle 5 avec mise en appui de la portion d'appui de la rondelle 48 contre le couvercle ;
- sertissage de la pièce femelle annulaire 50 autour de l'élargissement de diamètre 39 de la pièce mâle 5.

La pression de sertissage génère une compression selon l'axe X de la traversée qui est l'axe central de l'accumulateur.

Les inventeurs ont procédé à différents essais de sertissage en augmentant l'épaisseur E de la base de la pièce mâle 5 de la borne selon l'invention. Cette base est formée par l'élargissement de diamètre 40.

Par définition, la valeur de l'épaisseur E de la base 40 est d'autant plus importante que le diamètre Ø d'alésage 39 est élevé car plus ce diamètre augmente et, plus l'effort de sertissage doit être important.

Une autre caractéristique importante pour garantir une liaison mécanique robuste entre pièce mâle 5 et femelle 50, après sertissage est la hauteur H de la portion cylindrique de la pièce femelle 50 qui définit la hauteur de l'ajustement serré. On entend par « liaison mécanique robuste » au sens de l'invention, une liaison qui permet de satisfaire les spécifications requises, en termes de résistance mécanique de ce type de borne qui constitue une borne terminale ou de sortie d'un accumulateur, c'est-à-dire une tenue en traction, une tenue à un couple de serrage, une tenue en vibrations, une tenue aux chocs mécaniques, une tenue aux variations de températures (-40°C/+75°C),...

Pour s'affranchir d'une problématique éventuelle de dilatation relative entre pièces mâle 5 et femelle 50 de la borne selon l'invention, notamment dans le cas d'utilisations d'un module d'accumulateurs dans un environnement avec fortes variations de température, on peut prévoir avantageusement de réaliser un cordon de soudure continu S, bord à bord entre ces pièces 5, 50, de préférence par soudage laser.

Grâce à ce cordon de soudure S, on se prémunit de l'échauffement du filetage 36 de la pièce mâle, sous passage de forts courants qui pourraient conduire à une dégradation du serrage axial des rondelles 48, 49, du fait d'un début de glissement de la pièce femelle 50 sur l'axe de la pièce mâle 5.

La pièce femelle 50 peut être en un grade d'aluminium 5754 ou en cuivre ou cuivre nickelé. L'aluminium 5754 a pour avantages d'avoir de très bonnes caractéristiques mécaniques et reste intègre lorsqu'une pression est appliquée sur sa surface, notamment lors du sertissage selon l'invention. Le cuivre nickelé est avantageusement de même nature que celle définie pour une borne négative en cuivre classique, ce qui permet de conserver une interface identique pour un utilisateur.

La pièce mâle 5 est de préférence en cuivre nickelé car il est compatible avec les matériaux constituant le cœur électrochimique d'un accumulateur Li-ion (chimie des matériaux d'électrodes, électrolyte à base de LiPF6,..). Mais, comme déjà évoqué, la pièce mâle peut tout aussi bien être en aluminium.

Les rondelles isolantes 48, 49 sont quant à elles avantageusement réalisées en polyéthèrimide (PEI).

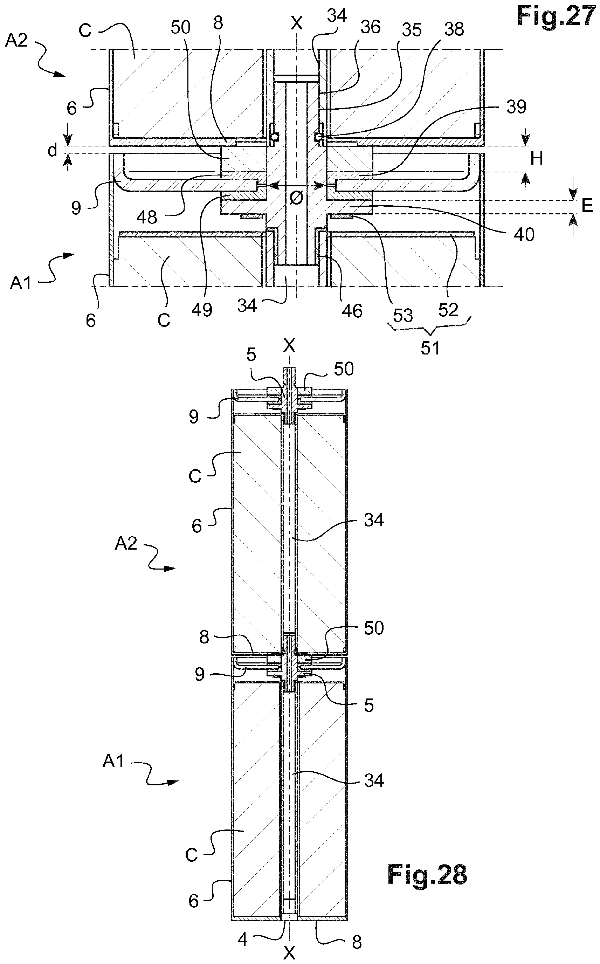

Comme visible en figures 27 et 28, le dimensionnement des différentes pièces de la borne de sortie, et en particulier la hauteur H1 de la pièce femelle 50 permet de garantir une distance de séparation d minimale entre deux boitiers 6 d'accumulateurs adjacents A1, A2. Typiquement, cette distance d est au moins égale à 1 mm, de préférence comprise entre 1 et 5 mm.

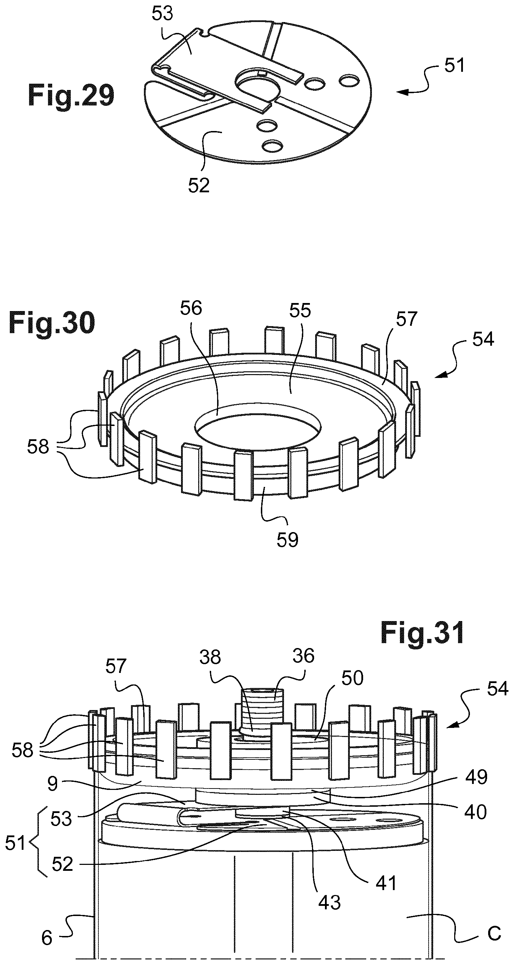

Pour garantir la bonne conduction électrique entre l'électrode au sein du faisceau électrochimique C d'une polarité donnée, notamment la polarité négative, et la borne de sortie selon l'invention, il est prévu un collecteur de courant métallique 51 illustré en tant que tel en figure 29.

Ce collecteur de courant 51 comprend un socle 52 plan qui est soudé au sommet du faisceau électrochimique C au feuillard métallique supportant le matériau actif de l'électrode et une languette 53 repliée sur elle-même et soudée à l'élargissement de diamètre 40 de la pièce mâle 5 de la borne. Ce socle 52 et languette 53 assurent donc la continuité électrique entre l'électrode et la borne de sortie, de polarité donnée.

Comme évoqué, un mode de circulation de refroidissement/réchauffage consiste à venir réaliser une circulation du fluide caloporteur sur la périphérie des accumulateurs A1-A4 au sein d'un même module, avec une mise en contact directe sur les enveloppes latérales de leurs boitiers, c'est-à-dire en s'affranchissant d'un tube intérieur 11 supplémentaire.

En outre, comme expliqué ci-avant, le dimensionnement d'une borne de sortie selon l'invention d'un accumulateur et sa fixation par vissage au fond du boitier d'un accumulateur adjacent autorisent une distance de séparation minimale d entre ces deux accumulateurs assemblés.

Les inventeurs ont pensé à mettre à profit cet espace de séparation minimale pour définir une pièce d'interface 54 qui permet à la fois :
- d'assurer en lieu et place d'un espace libre de matériau, une isolation électrique entre deux accumulateurs adjacents reliés électriquement et assemblés au sein d'un même module;
- de garantir une sécurité supplémentaire dans le centrage et maintien mécanique entre les deux accumulateurs ;
- de maintenir un jeu avec un tube externe 12, afin de définir avec la peau des accumulateurs connectés entre eux, c'est-à-dire avec leurs enveloppes latérales de boitiers, un conduit à double-paroi 10 de circulation de fluide caloporteur.

Cette pièce d'interface 54 formant une collerette est montrée en tant que telle en figure 30. Elle comprend tout d'abord un socle plan 55 percée d'une ouverture débouchante 56 dont le diamètre est adapté à celui de la pièce femelle 50 qui vient s'y loger.

Le socle plan 55 est entouré d'une paroi annulaire 57 qui comprend une pluralité de pattes d'entretoise 58 réparties uniformément à la périphérie de la paroi annulaire 57 selon un pas d'espacement e5. Ces pattes 58 ont pour fonction de garantir une entretoise, c'est-à-dire de garantir un écartement fixe avec un tube extérieur 12 dans lequel sont logés les accumulateurs A1-A4 assemblés entre eux d'un même module M.

La paroi latérale 57 est en outre conformée pour délimiter une gorge annulaire 59 de forme complémentaire avec celle du dessus d'un boitier 6 d'accumulateur, c'est-à-dire complémentaire à la forme supérieure de l'enveloppe latérale 7 et du couvercle 9 qui y est soudé.

Ainsi, une pièce d'interface ou collerette 54 est adaptée pour venir s'emmancher par sa gorge annulaire 59 sur le rebord intérieur du couvercle 9 de boitier 6 et le dessus de son enveloppe latérale 7.

Cet emmanchement peut être réalisé manuellement et les dimensions de la collerette 54 permettent avantageusement un serrage au montage.

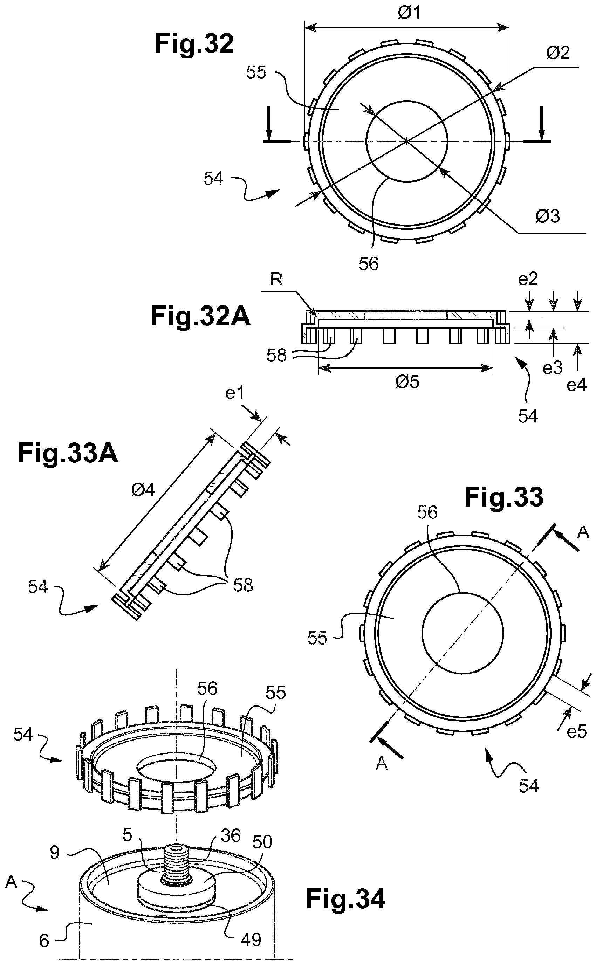

A titre d'exemple indicatif, pour un accumulateur de format cylindrique 50125, les dimensions de la collerette 54, référencées aux figures 32 à 33A, sont celles du tableau 1 suivant.

**TABLEAU 1**

| Diamètre | Hauteur/espacement | Rayon de courbure |
|---|---|---|
| Ø1 = 52 mm | e1 = 3,5 mm | R 0,50 |
| Ø2 = 50,5+/-0,1 mm | e2 = 2 mm | |
| Ø3 = 20,5 mm | e3 = 4,5 mm | |
| Ø4 = 46 mm+0,1 mm | e4 = 8,5 mm | |
| Ø5 = 44 mm | e5 = 6 mm | |

Avec un couvercle 9 qui a usuellement un diamètre interne de 46 +/-0,1 mm, le serrage obtenu avec la collerette 54 selon les dimensions indiquées dans le tableau est de 0,2 à 0,25 mm pour la cote minimale de couvercle, ou de 0 à 0,05 mm pour la côte maximale du couvercle.

Autrement dit, on garantit un serrage de la collerette lors de sa mise en place sur le couvercle 9.

La collerette 54 peut avantageusement être réalisée par injection d'un plastique, notamment un PA6-6 ou un polyoxyméthylène (POM) tel que celui commercialisé sous la marque Delrin 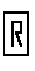 .

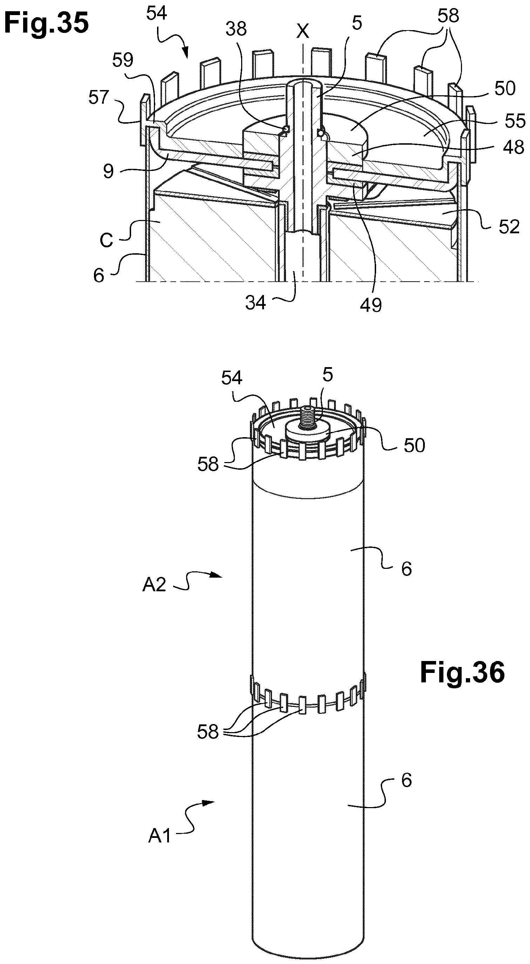

Les figures 34 et 35 montrent la collerette 54 respectivement avant et une fois sa mise en place avec serrage réalisée sur un boitier 6 d'accumulateur.

Ainsi, une fois mise en place sur un accumulateur A1, la collerette 54 permet de guider l'accumulateur adjacent A2, lors de la connexion électrique entre borne 5 et mandrin creux 34. Le guidage se fait donc via cette collerette 54 et la périphérie extérieure du fond 8 du boitier d'accumulateur.

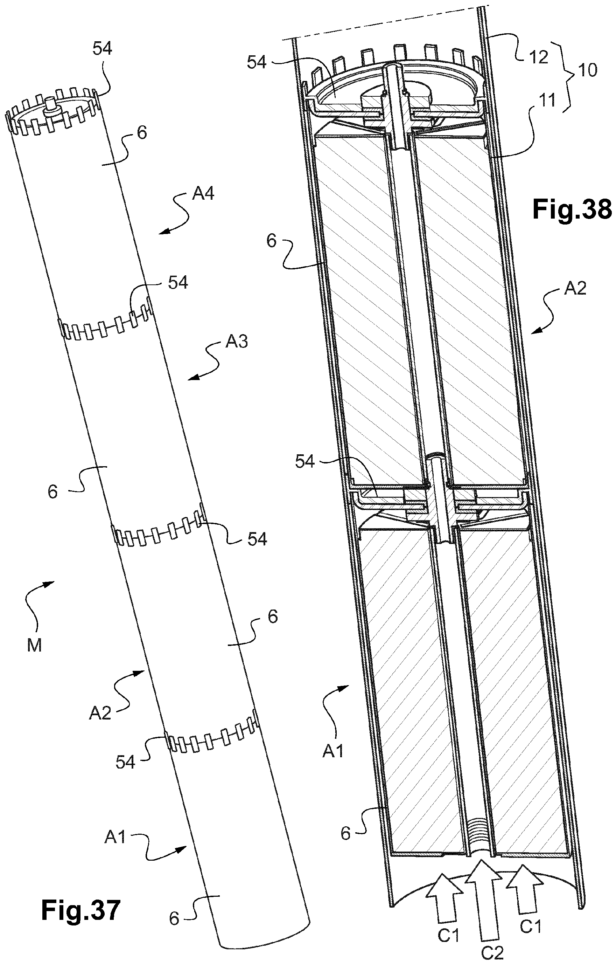

Les figures 36 et 37 montrent l'extérieur d'une partie d'un module M avec les accumulateurs A1-A4 reliés électriquement entre eux, assemblées par leurs bornes 5 et mandrin creux 34, et guidés et espacés les uns des autres par les collerettes 54 agencées individuellement entre eux.

Comme montré sur la figure 38, cet ensemble est à son tour inséré dans un tube 12 qui va constituer le tube extérieur du conduit double-paroi 10 pour la circulation du fluide caloporteur C1 en périphérie des accumulateurs, la double-paroi étant délimitée intérieurement par les enveloppes latérales des boitiers 6 d'accumulateurs. Durant cette insertion, le guidage des accumulateurs A1-A4 est assuré par le diamètre extérieur de la collerette 54, c'est-à-dire par le diamètre externe Ø1 des pattes d'entretoise 58.

Outre le fait que le tube extérieur 12 doit bien entendu avoir un diamètre interne supérieur, afin de permettre un emboitement aisé des accumulateurs A1-A4 assemblés, on dimensionne également ce diamètre interne en fonction du diamètre extérieur de la collerette 54 et des épaisseurs des pattes d'entretoise 58, de sorte à maitriser les pertes de charge du fluide caloporteur tout en veillant à bloquer les accumulateurs et résister notamment à des contraintes vibratoires.

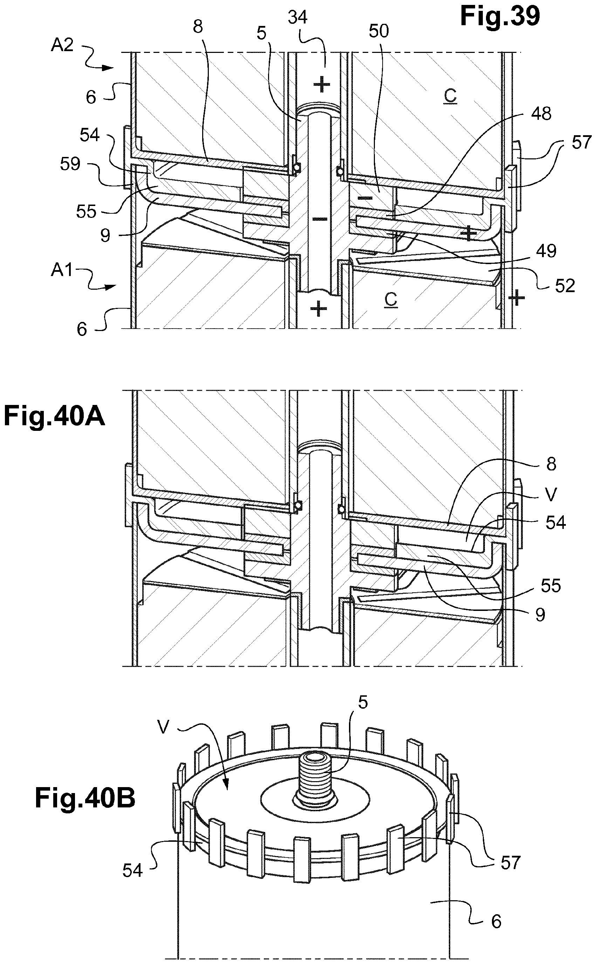

La fonction supplémentaire de la collerette 54 qui vient d'être décrite est d'isoler électriquement les accumulateurs A1-A2 entre eux, lors de et, une fois la connexion par la borne de sortie 5 réalisée. La figure 39 illustre bien cette fonction où l'on voit clairement que de par la forme de la collerette 54, tout contact entre deux boitiers 6 d'accumulateurs adjacents, et plus particulièrement entre le couvercle 9 de l'un et le fond 8 de l'autre est proscrit.

Les inventeurs ont pensé en outre à assigner à la collerette 54 une autre fonction. En effet, comme montré en figures 40A et 40B, les inventeurs ont défini une collerette 54 qui, une fois l'assemblage entre accumulateurs adjacents réalisé, laisse un volume V libre entre le socle 55 de la collerette 54 et le fond 8 du boitier 6 adjacent.

Ainsi, ils ont pensé à mettre à profit ce volume V disponible pour y loger un module électronique 60 ou microcontrôleur adapté pour gérer le management électrique de chaque accumulateur indépendamment des autres.

En effet, dans un pack-batterie, il est intéressant de pouvoir monitorer chaque accumulateur afin de remonter les tensions de celles-ci au BMS du pack, et ce dans le double objectif de détecter un éventuel défaut et d'équilibrer en tension l'ensemble des accumulateurs.

Plus précisément, chaque module électronique 60 ou microcontrôleur peut comporter au moins une mémoire, un module de communication adapté pour recevoir et/ou transmettre des données depuis et/ou vers l'extérieur de chaque accumulateur et un processeur adapté pour recevoir et/ou transmettre au moins des données depuis et/ou vers le module de communication.

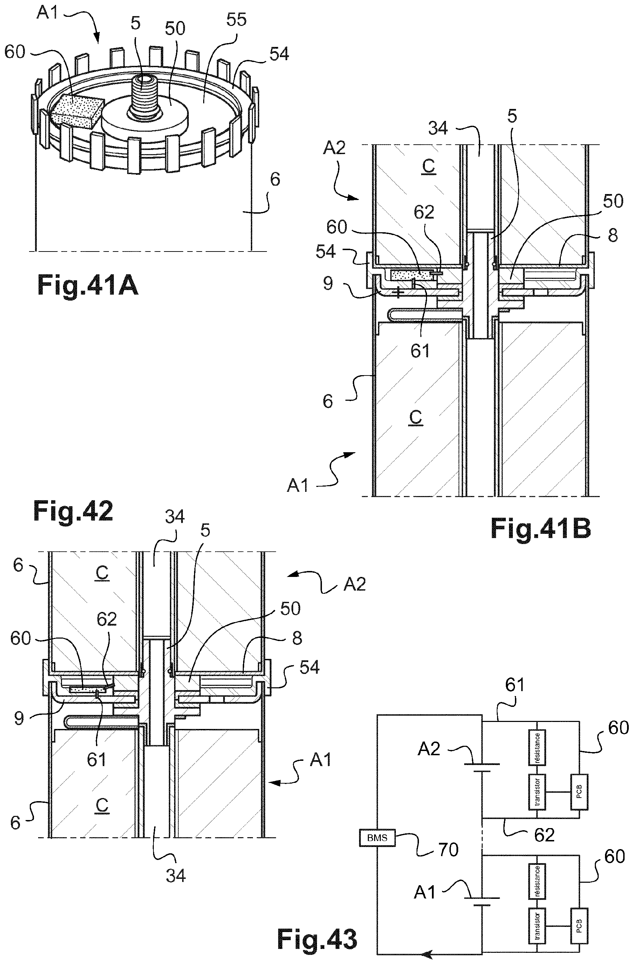

Les inventeurs ont donc pensé à utiliser le socle 55 de la collerette 54 en tant que support d'un module électronique 60, comme montré en figures 41A et 41B. Le module électronique 60 peut être fixé par collage ou autre moyen sur le socle 55.

L'alimentation d'un module électronique 60 est avantageusement assurée par les bornes d'un accumulateur. Comme montré en figures 41B on peut ainsi faire passer un fil 61 d'alimentation électrique d'une polarité au travers de la collerette 54 pour le relier électriquement au couvercle et un autre fil 62 d'alimentation électrique 62, de polarité opposée pour le relier électriquement à la pièce femelle 50 de la borne. Ainsi, les fils d'alimentation électrique 61, 62 alimentent de manière autonome le module électronique 60 par le courant délivré par l'accumulateur.

La figure 42 montre une variante selon laquelle le module électronique 60 est noyé par thermoformage dans l'épaisseur du socle 55 de la collerette 54.

La figure 43 montre le schéma électrique équivalent d'un module M d'accumulateurs A1-A2 reliés à un BMS 70, et alimentant chacun un module électronique 60. Les remontées de tension des modules électroniques 60 vers le BMS se font par courant porteur CPL sur le circuit de puissance des accumulateurs A1-A2.

Une variante de cette réalisation, consiste à relier tous les modules électroniques 60 entre eux pour que le BMS 70 puisse communiquer directement avec ces électroniques, afin d'avoir une redondance physique sur la remontée des tensions.

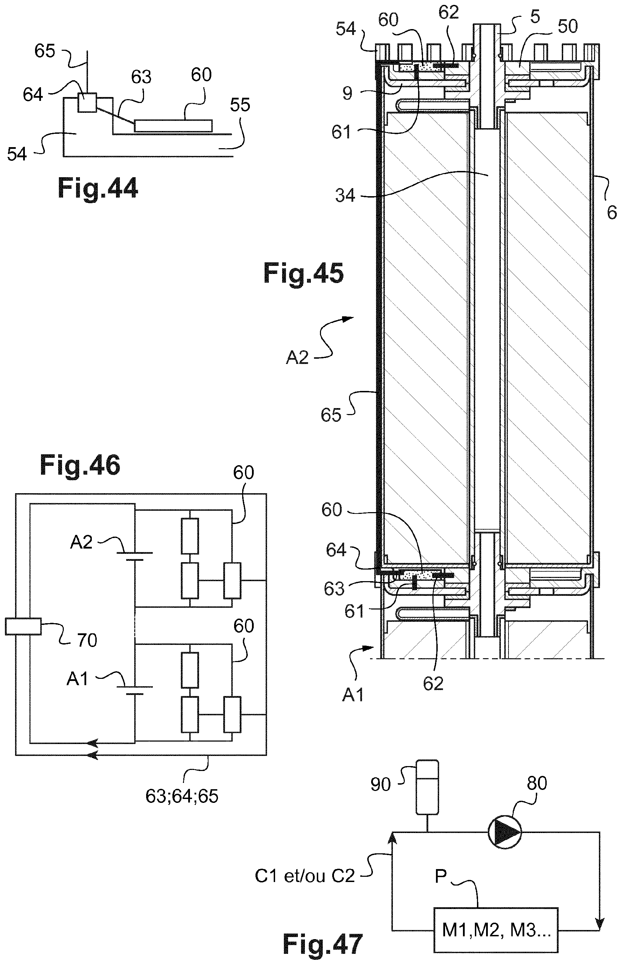

Cette redondance est assurée par des fils de liaison 64, 65 entre modules 60. Comme montré en figures 44 et 45, un premier fil de liaison 64 est connecté depuis le module 60 à une connectique 64 agencée dans l'épaisseur du bord externe 57 de la collerette 54 puis un deuxième fil de liaison 65 est fixé de préférence par collage sur l'enveloppe latérale 7 du boitier 6 de l'accumulateur, afin de relier chacune des connexions sur les collerettes 54. Avec ces fils de liaisons 64, 65, on introduit que très peu voire pas du tout de pertes de charge supplémentaire dans le fluide caloporteur C1.

La figure 46 montre le schéma électrique équivalent avec la redondance par fils 63, 65 et connectique 64.

En ayant défini un module M d'accumulateurs A1, A2,...Am reliés en série électriquement et refroidis/réchauffés au moyen d'une circulation de fluide caloporteur C1 et/ou C2, et un pack-batterie constitué d'une pluralité de modules M1, M2...Mn, les inventeurs se sont penchés sur la maitrise de la sécurité, notamment vis-à-vis de la génération des gaz ou la propagation d'un emballement thermique.

Ils ont alors pensé à pouvoir dégazer en continu les gaz résultants du fonctionnement électrochimique anormal des accumulateurs via le circuit de caloporteur et en profiter pour récupérer et quantifier ces gaz.

Ainsi, ils ont défini le système fluidique comme schématisé en figure 47.

Une pompe 80 fonctionnant en permanence alimente en permanence le circuit de liquide caloporteur C1 et/ou C2 lors du fonctionnement d'un module M1 ou d'un pack-batterie P constitué d'une pluralité de modules M1, M2, M3...

Un vase d'expansion 90 est implanté sur ce circuit. Les gaz générés dans le circuit de caloporteur sont dont récupérés dans le ciel du vase d'expansion 90. Ainsi, en cas de surpression de gaz, le ciel gazeux se remplit et au-delà d'un seuil de surpression prédéterminé, cela peut ouvrir de manière automatique le circuit électrique à l'échelle d'un module M1 ou du pack-batterie P et ainsi garantir une sécurité de fonctionnement permanente. En outre, un organe de sécurité peut être prévu pour protéger le vase d'expansion d'une surpression dans le ciel gazeux, notamment une soupape, et/ou un organe de régulation pilotable par le BMS.

Pour réaliser l'ouverture du circuit électrique, les inventeurs ont pensé à implanter une membrane à rupture ou opercule à rupture directement au sein de chaque borne de sortie d'un accumulateur selon l'invention.

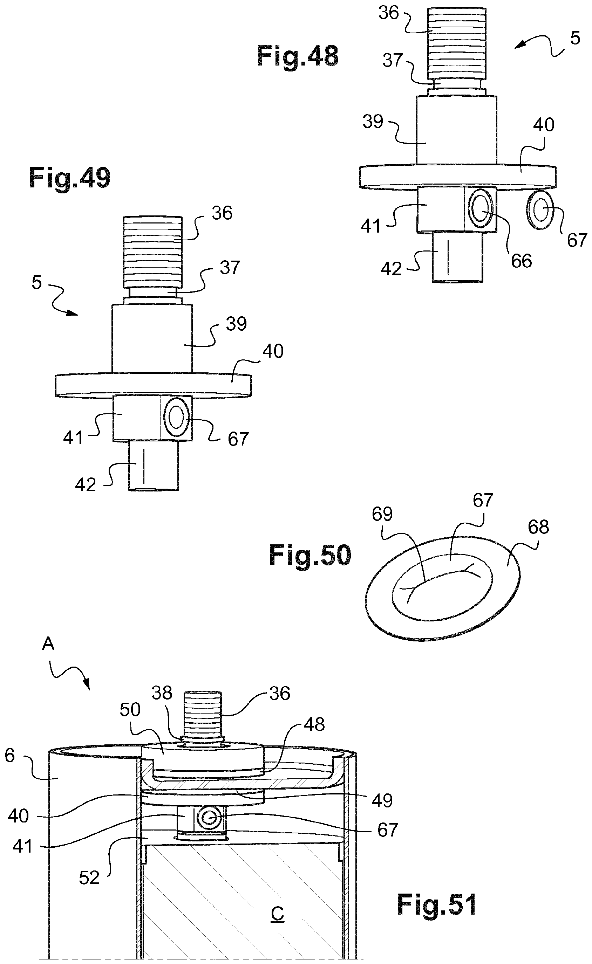

Plus précisément, comme montré sur les figures 48 à 51, la pièce mâle 5 est percée au niveau de sa réduction de diamètre 41 d'un trou traversant 66 qui rejoint l'intérieur de la pièce.

Sur ce trou traversant 66 est fixée, de préférence par soudage une membrane à rupture 67 qui forme un évent. Cette membrane à rupture 67 est perméable au gaz et imperméable et compatible avec un liquide de refroidissement. Un type de membrane avantageux est décrit dans la demande de brevet WO 1996/016288 A1.

Comme montré en figure 49, l'évent peut être constituée d'une membrane sous la forme d'un disque 67 en matière perméable aux gaz et imperméable au fluide de refroidissement, typiquement selon la demande WO 1996/016288 A1 et d'une couronne en métal 68 soudée sur la pièce 5 et qui vient prendre en sandwich la membrane 67 sur le trou traversant 66.

Comme cela est clairement visible sur la figure 51, la membrane 67 est agencée sur la pièce mâle 5 de la borne de l'accumulateur, de telle sorte qu'elle soit dans le volume vide de ce dernier, c'est-à-dire au-dessus du socle 52 de collecteur 51, où les gaz se forment pendant le fonctionnement électrochimique.

Ainsi, cette membrane 67 constitue aussi un évent de sécurité, en cas de surpression de gaz. En effet, dans ce cas, les lignes de rupture 69 pratiquées dans la membrane 67 rompent et cette dernière se déchire. On peut fixer la valeur de rupture à une valeur maximum de pression des gaz de l'ordre de 12 bar.

Par conséquent, en cas de forte quantité de gaz généré dans un quelconque des accumulateurs d'un module M ou d'un pack-batterie P, cela provoque une surpression de gaz dans l'accumulateur et provoque ainsi la rupture de la membrane 67 et donc au noyage de l'accumulateur en surpression par le fluide caloporteur C2, de préférence une huile.

Les gaz en surpression arrivent dans le ciel du vase d'expansion et le seuil de déclenchement est dépassé, ce qui conduit à l'ouverture de circuit électrique en série, soit du module concerné, soit de l'ensemble du pack-batterie.

Les inventeurs ont réalisé des calculs avec simulation thermique pour mettre en évidence la pertinence des divers types de refroidissement/réchauffage selon l'invention.

Pour des accumulateurs de format cylindrique et avec des tailles standards, typiquement respectivement standard 18650, 26650, 50125, il est possible de calculer le ratio entre la surface d'échange et le volume de l'accumulateur.

Plus le ratio est élevé et plus la cellule électrochimique de l'accumulateur est aisément refroidie (ou chauffée). Ce ratio passe de 250 à 95 quand on passe d'un accumulateur format 18650 à un accumulateur format 50125.

Donc, avec des accumulateurs de taille relativement conséquente, le coefficient d'échange thermique doit être augmenté pour compenser cette réduction de surface d'échange par unité de volume.

Dans les exemples indiqués dans le tableau 2 ci-dessous, le format retenu pour les accumulateurs est le format 50125, c'est-à-dire un diamètre de 50 mm et une hauteur de 125 mm.

Pour faire le comparatif entre les différents modes de refroidissement selon l'état de l'art et selon l'invention, on génère une source de chaleur interne équivalente à une décharge à 1C, soit environ 13 Watts.

L'accumulateur simulé selon l'invention présente un mandrin creux, c'est-à-dire un accumulateur perforé sur toute la hauteur de son axe central, avec un diamètre extérieur égal à 9 mm et un diamètre intérieur de 7 mm.

On précise que pour l'exemple 1, l'accumulateur présente un mandrin creux dans lequel l'air est emprisonné sans véritable effet de refroidissement compte-tenu du faible volume.

On précise également que pour les simulations, les accumulateurs ne comprennent pas de boitier externe mais du fait de la faible épaisseur de ce dernier, il n'aurait que peu ou pas d'influence sur les simulations.

**TABLEAU 2**

| Exemples | Type de refroidissement | Température moyenne volumique (°C) | Figure concernée |
|---|---|---|---|
| Exemple comparatif selon l'état de l'art | Air libre avec coefficient thermique h égal à 10 W/m2/K et Température extérieure de 25°C | 57,8 | Figure 52 |
| Exemple 1 selon l'invention | Air libre et circulation d'huile diélectrique uniquement dans le mandrin creux | 43,6 | Figure 53 |
| Exemple 2 selon l'invention | Circulation d'huile diélectrique à la fois dans le mandrin creux et sur la périphérie de l'accumulateur | 29,1 | Figure 54 |
| Exemple 3 selon l'invention | Circulation d'huile diélectrique uniquement sur la périphérie de l'accumulateur | 30,8 | Figure 55 |

De ce tableau 2, il ressort qu'un refroidissement liquide sur la périphérie des parois externes d'un accumulateur permet d'abaisser fortement la température moyenne de l'accumulateur, puisque par comparaison avec l'exemple selon l'état de l'art qui met en œuvre un refroidissement naturel à l'air libre, l'écart est d'environ 30°C sur la température moyenne.

En outre, l'ajout d'une circulation d'huile au cœur de l'accumulateur, c'est-à-dire sur toute sa hauteur centrale dans le mandrin creux permet de réduire les écarts de température dans le cœur de l'accumulateur.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

Si dans l'ensemble des exemples détaillés, les accumulateurs A1-A4 illustrés sont de format cylindrique, on peut envisager de réaliser l'ensemble des caractéristiques de l'invention avec des accumulateurs de format prismatique.

Egalement, on a décrit dans l'ensemble des exemples détaillés, une ou plusieurs circulations de fluide caloporteur pour réaliser le refroidissement ou l'homogénéisation de température des accumulateurs A1-A4 d'un même module M et pour plusieurs modules M1...Mn reliés électriquement et fluidiquement entre eux. Le fluide caloporteur peut aussi être un fluide de chauffe pour le préchauffage des accumulateurs ou pour un maintien en température permanent des accumulateurs. Cela peut s'avérer intéressant pour certaines chimies de cellules qui requièrent typiquement une température de fonctionnement bien au-delà de la température ambiante.

Par ailleurs, pour la réalisation du sous-ensemble creux 33 selon l'invention, on a décrit le procédé de soudage par impulsion magnétique pour le soudage entre la pièce isolante électrique 43 et d'une part la pièce mâle 5 d'une borne et d'autre part le mandrin 34 qui forme la borne de polarité opposée. On peut tout-à-fait envisager d'autres techniques d'assemblage entre ces différentes pièces 5, 34, 43 comme le frettage et/ou le collage.

## Revendications

1. Traversée formant borne pour accumulateur électrochimique métal-ion, réalisée à travers un orifice (47) débouchant de part et d'autre d'une paroi (9) du boitier de l'accumulateur, comportant :
- une pièce mâle électriquement conductrice (5), comprenant intérieurement un passage, destiné à faire circuler un fluide de refroidissement ayant circulé selon l'axe longitudinal de l'accumulateur, le passage étant débouchant vers l'extérieur de l'accumulateur ;
- une pièce femelle électriquement conductrice (50), ajustée serrée autour d'une partie de la pièce mâle, à l'extérieur de l'accumulateur;
- deux rondelles (48, 49) électriquement isolantes, comportant chacune une portion d'appui en appui surfacique avec pression à la fois contre l'une des faces de la paroi et une portion de guidage en saillie par rapport à la portion d'appui et en contact avec le bord de l'orifice (47) ; la portion d'appui d'une rondelle (48) étant en appui avec pression contre la pièce femelle ; la portion d'appui de l'autre rondelle (49) étant en appui avec pression contre une partie de la pièce mâle ;
la pièce mâle (5) comprenant :
• un filetage (36) destiné à coopérer par vissage avec un autre filetage (35) pour la fixation et la sortie électrique de l'accumulateur ;
• un premier élargissement diamètre (39) en dessous du filetage (36) et qui sert de diamètre de sertissage à la pièce femelle (50), et
• un deuxième élargissement de diamètre (40) dans la continuité du premier qui sert de surface à la fois d'appui avec la rondelle d'isolation électrique (49) et de surface de connexion à un collecteur de courant (51) destiné à faire la liaison électrique avec la cellule électrochimique de l'accumulateur.

2. Traversée selon la revendication 1, comprenant en outre un cordon de soudure continu (S) réalisé bord à bord entre les pièces mâle et femelle.

3. Traversée selon l'une des revendications précédentes, la pièce mâle (5) comprenant une gorge annulaire (37) adaptée pour loger un joint d'étanchéité torique (38).

4. Traversée selon l'une des revendications précédentes, la pièce mâle (5) étant en cuivre nickelé ou en alliage d'aluminium.

5. Traversée selon l'une des revendications précédentes, la pièce femelle (50) étant en un grade d'aluminium 5754 ou en cuivre ou cuivre nickelé.

6. Traversée selon l'une des revendications précédentes, les rondelles isolantes (48, 49) étant en polyéthèrimide (PEI).

7. Batterie ou accumulateur métal-ion comportant un boitier (6) avec un couvercle (9) à travers lequel une traversée selon l'une quelconque des revendications précédentes est réalisée.

8. Batterie ou accumulateur métal-ion selon la revendication 7, le couvercle étant en aluminium, tel que l'aluminium 1050 ou 3003.

9. Batterie ou accumulateur Li-ion selon la revendication 7 ou 8, accumulateur dans lequel :
- le matériau d'électrode(s) négative(s) est choisi dans le groupe comportant le graphite, le lithium, l'oxyde de titanate Li₄TiO₅O_{12 ;}
- le matériau d'électrode(s) positive(s) est choisi dans le groupe comportant LiFePO₄, LiCoO₂, LiNi_{0.33}Mn_{0.33}Co_{0.33}O₂.

10. Module (M) d'accumulateurs, comprenant au moins deux accumulateurs (A1, A2) selon l'une des revendications 7 à 9, les accumulateurs étant assemblés entre eux par le biais de la traversée formant borne de sortie d'un (A1) des accumulateurs, vissée à un mandrin creux (34) de l'autre (A2) des accumulateurs, à travers le fond (8) de ce dernier.

11. Module (M) d'accumulateurs selon la revendication 10, la traversée étant vissée dans le mandrin creux selon un couple de serrage au moins égal à 3 N.m.

12. Pack-batterie comprenant un ou plusieurs modules (M) d'accumulateurs selon la revendication 10 ou 11.

## Patentansprüche

1. Durchführung, welche einen Anschluss für einen elektrochemischen Metall-Ionen-Akkumulator bildet, durch eine Öffnung (47) hindurch ausgebildet ist, die beiderseits einer Wand (9) des Gehäuses des Akkumulators mündet, und aufweist:
- einen elektrisch leitenden Steckteil (5), der innen einen Durchgang umfasst, der dazu bestimmt ist, ein Kühlfluid strömen zu lassen, das entlang der Längsachse des Akkumulators geströmt ist, wobei der Durchgang zur Außenseite des Akkumulators hin mündet;
- einen elektrisch leitenden Aufnahmeteil (50), der mit Presssitz um einen Teil des Steckteils herum angeordnet ist, außerhalb des Akkumulators;
- zwei elektrisch isolierende Scheiben (48, 49), die jeweils einen Stützabschnitt, der flächig mit Druck gleichzeitig an einer der Seiten der Wand anliegt, und einen Führungsabschnitt, der in Bezug auf den Stützabschnitt vorsteht und mit dem Rand der Öffnung (47) in Kontakt steht, aufweisen; wobei der Stützabschnitt einer Scheibe (48) mit Druck an dem Aufnahmeteil anliegt; wobei der Stützabschnitt der anderen Scheibe (49) mit Druck an einem Teil des Steckteils anliegt;
wobei der Steckteil (5) umfasst:
• ein Gewinde (36), das dazu bestimmt ist, durch Verschraubung mit einem anderen Gewinde (35) zur Befestigung zur Befestigung und dem elektrischen Ausgang des Akkumulators zusammenzuwirken;
• eine erste Durchmesserverbreiterung (39) unterhalb des Gewindes (36), welche als Klemmdurchmesser für den Aufnahmeteil (50) dient, und
• eine zweite Durchmesserverbreiterung (40) in der Fortsetzung der ersten, welche gleichzeitig als Anlagefläche für die elektrisch isolierende Scheibe (49) und als Verbindungsfläche zu einem Stromabnehmer (51), der dazu bestimmt ist, die elektrische Verbindung mit der elektrochemischen Zelle des Akkumulators herzustellen, dient.

2. Durchführung nach Anspruch 1, welche außerdem eine durchgehende Schweißnaht (S) umfasst, die Rand an Rand zwischen dem Steckteil und dem Aufnahmeteil hergestellt ist.

3. Durchführung nach einem der vorhergehenden Ansprüche, wobei der Steckteil (5) eine Ringnut (37) umfasst, die dafür ausgelegt ist, einen O-Dichtring (38) aufzunehmen.

4. Durchführung nach einem der vorhergehenden Ansprüche, wobei der Steckteil (5) aus vernickeltem Kupfer oder aus Aluminiumlegierung besteht.

5. Durchführung nach einem der vorhergehenden Ansprüche, wobei der Aufnahmeteil (50) aus einer Aluminiumlegierung 5754 oder aus Kupfer oder aus vernickeltem Kupfer besteht.

6. Durchführung nach einem der vorhergehenden Ansprüche, wobei die isolierenden Scheiben (48, 49) aus Polyetherimid (PEI) bestehen.

7. Metall-Ionen-Batterie oder -Akkumulator, die bzw. der ein Gehäuse (6) mit einem Deckel (9) aufweist, durch den hindurch eine Durchführung nach einem der vorhergehenden Ansprüche hergestellt ist.

8. Metall-Ionen-Batterie oder -Akkumulator nach Anspruch 7, wobei der Deckel aus Aluminium besteht, wie etwa Aluminium 1050 oder 3003.

9. Lithium-Ionen-Batterie oder -Akkumulator nach Anspruch 7 oder 8, wobei in dem Akkumulator:
- das Material der negativen Elektrode(n) aus der Gruppe ausgewählt ist, welche Graphit, Lithium, Lithium-Titanat-Oxid Li₄TiO₅O₁₂ umfasst;
- das Material der positiven Elektrode(n) aus der Gruppe ausgewählt ist, welche LiFePO₄, LiCoO₂, LiNi_{0,33}Mn_{0,33}Co_{0,33}O₂ umfasst.

10. Modul (M) von Akkumulatoren, welches wenigstens zwei Akkumulatoren (A1, A2) nach einem der Ansprüche 7 bis 9 umfasst, wobei die Akkumulatoren über die einen Ausgangsanschluss bildende Durchführung eines (A1) der Akkumulatoren, die an einen hohlen Dorn (34) des anderen (A2) der Akkumulatoren durch den Boden (8) dieses Letzteren hindurch angeschraubt ist, zusammengebaut sind.

11. Modul (M) von Akkumulatoren nach Anspruch 10, wobei die Durchführung in den hohlen Dorn mit einem Anzugsmoment von wenigstens 3 N.m eingeschraubt ist.

12. Batteriepack, welches ein oder mehrere Module (M) von Akkumulatoren nach Anspruch 10 oder 11 umfasst.

## Claims

1. Bushing which forms a terminal for a metal/ion electrochemical accumulator, formed through a hole (47) which opens at one side and the other of a wall (9) of the casing of the accumulator, comprising:
- an electrically conductive male component (5), comprising at the inner side a passage which is intended to circulate a cooling fluid which has circulated along the longitudinal axis of the accumulator, the passage opening towards the outer side of the accumulator;
- an electrically conductive female component (50) adjusted so as to be tightened around a portion of the male component, at the outer side of the accumulator;
- two electrically insulating washers (48, 49) which each comprise an abutment portion which is in surface abutment with pressure at the same time against one of the faces of the wall and a guiding portion which protrudes relative to the abutment portion and which is in contact with the edge of the hole (47); the abutment portion of a washer (48) being in abutment with pressure against the female component; the abutment portion of the other washer (49) being in abutment with pressure against a portion of the male component, the male component (5) comprising:
- a thread (36) which is intended to cooperate by means of screwing with another thread (35) for the fixing and the electrical output of the accumulator;
- a first diameter enlargement (39) which is located below the thread (36) and which acts as a diameter for crimping to the female component (50), and
- a second diameter enlargement (40) in continuation of the first which acts as a surface both for abutment with the electrical insulation washer (49) and a surface for connection to a current collector (51) which is intended to make the electrical connection with the electrochemical cell of the accumulator.

2. Bushing according to Claim 1, further comprising a continuous weld bead (S) produced edge to edge between the male and female components.

3. Bushing according to either one of the preceding claims, the male component (5) comprising an annular groove (37) which is capable of receiving an O-ring seal (38) .

4. Bushing according to any one of the preceding claims, the male component (5) being of nickel-plated copper or of aluminium alloy.

5. Bushing according to any one of the preceding claims, the female component (50) being of a grade of aluminium 5754 or of copper or nickel-plated copper.

6. Bushing according to any one of the preceding claims, the insulating washers (48, 49) being of polyetherimide (PEI) .

7. Battery or metal/ion accumulator comprising a casing (6) with a cover (9) through which a bushing according to any one of the preceding claims is produced.

8. Battery or metal/ion accumulator according to Claim 7, the cover being of aluminium, such as aluminium 1050 or 3003.

9. Battery or Li-ion accumulator according to Claim 7 or 8, in which accumulator
- the material of the negative electrode(s) is selected from the group comprising graphite, lithium, titanate oxide Li₄TiO₅O₁₂;
- the material of the positive electrode(s) is selected from the group comprising LiFePO₄, LiCoO₂, LiNi_{0.33}Mn_{0.33}Co_{0.33}O₂.

10. Module (M) of accumulators, comprising at least two accumulators (A1, A2) according to any one of Claims 7 to 9, the accumulators being assembled with each other by means of the bushing which forms an output terminal of one (A1) of the accumulators screwed to a hollow mandrel (34) of the other (A2) of the accumulators, via the base (8) thereof.

11. Module (M) of accumulators according to Claim 10, the bushing being screwed in the hollow mandrel in accordance with a clamping torque at least equal to 3 N.m.

12. Battery pack comprising one or more modules (M) of accumulators according to Claim 10 or 11.
